(19) Europäisches Patentamt
European Patent Office
Office européen des brevets

(11) EP 2 588 513 B1

(12) # EUROPEAN PATENT SPECIFICATION

(45) Date of publication and mention of the grant of the patent:
**04.10.2017 Bulletin 2017/40**

(21) Application number: **11734046.3**

(22) Date of filing: **30.06.2011**

(51) Int Cl.:
***C08G 65/40*** *(2006.01)* ***G01N 31/16*** *(2006.01)*

(86) International application number:
**PCT/EP2011/061069**

(87) International publication number:
**WO 2012/001131 (05.01.2012 Gazette 2012/01)**

(54) **METHOD OF MAKING POLY(ARYL ETHER KETONES) FROM 4,4' DIFLUOROBENZOPHENONE COMPRISING OXIDIZING SPECIES AND/OR NITRO COMPOUNDS**

VERFAHREN ZUR HERSTELLUNG VON POLY(ARYLETHERKETONEN) AUS 4,4'-DIFLUORBENZOPHENON MIT OXIDIERENDEN SPEZIES UND/ODER NITROVERBINDUNGEN

PROCÉDÉ DE FABRICATION DE POLY(ARYLÉTHERCÉTONES) À PARTIR DE 4,4' DIFLUOROBENZOPHÉNONE COMPRENANT DES ESPÈCES OXYDANTES ET/OU DES COMPOSÉS NITRÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.07.2010 US 361138 P**
**23.02.2011 EP 11155654**

(43) Date of publication of application:
**08.05.2013 Bulletin 2013/19**

(73) Proprietor: **Solvay Specialty Polymers USA, LLC.**
**Alpharetta, GA 30005-3914 (US)**

(72) Inventors:
- **LOUIS, Chantal**
  **Alpharetta, GA 30005 (US)**
- **YI, Kong**
  **Marietta, GA 30068 (US)**
- **CLENDINNING, Robert A.**
  **Cumming, GA 30040-7080 (US)**
- **KELSEY, Donald R.**
  **Guerneville, CA 95446 (US)**
- **BALDWIN, Ronald**
  **Alpharetta, GA 30005-3914 (US)**

(74) Representative: **Benvenuti, Federica et al**
**Solvay S.A.**
**Département de la Propriété Intellectuelle**
**Rue de Ransbeek, 310**
**1120 Bruxelles (BE)**

(56) References cited:
**WO-A1-2007/144610 WO-A1-2007/144615**
**US-A- 5 064 929**

- **KNECHT ET AL: "Das Titansesquioxyd und dessen Salze als Reductionsmittel /// Titanium oxide and its salts as reducing agents", BERICHTE DER DEUTSCHEN CHEMISCHEN GESELLSCHAFT, WILEY-VCH VERLAG GMBH & CO. KGAA, DE, vol. 36, 1 January 1903 (1903-01-01), pages 166-169, XP009150855, ISSN: 0365-9496 cited in the application**
- **ZAFIR M: "Vereinfachte Vorrichtung zur Titration von No2 Gruppen mittels Ti-III-Chloridlösungen", FOLIA PHARMACEUTICA = FOLYA FARMASOTIKA, ISTAMBUL, TURKEY, vol. 4, 1 January 1959 (1959-01-01), pages 431-434, XP001526105, ISSN: 0428-8300**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 588 513 B1

## Description

REFERENCE TO RELATED APPLICATIONS

This application claims priority to U.S. provisional application 61/361138, filed July 2, 2010, to EP application 11155654.4, filed on February 23, 2011, whose disclosures are incorporated herein by reference.

FIELD OF THE INVENTION

The present application relates to methods for preparing Poly(Aryl Ether Ketones)(PAEK) and Poly (Ether Ether Ketones) (PEEK), using as a co-monomer 4,4'-difluorobenzophenone (4,4'-DFBP) that comprises small quantities of oxidizing species as impurities, such as for example nitro compounds. Also described are the resulting PAEK and PEEK polymers prepared from 4,4'-DFBP that comprises such oxidizing species, and analytical methods for measuring the concentration of the impurity oxidizing species in the 4,4'-difluorobenzophenone.

BACKGROUND OF THE INVENTION

4,4'-difluorobenzophenone (4,4'-DFBP) is a well known chemical intermediate having the following chemical formula :

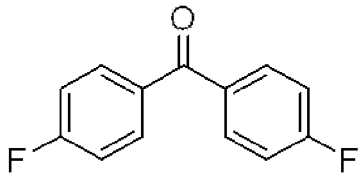

4,4'-DFBP is known to be useful in the preparation of, e.g., PAEK polymers such as PEEK and PEK.

PAEK polymers are a well known class of engineering polymers useful in various fields of scientific and commercial endeavour. Generally, PAEK polymers are prepared by aromatic nucleophilic substitution of both the fluorides of the 4,4'-DFBP by a nucleophilic oxygen atom from a co-monomer. For example, p-hydroquinone, commonly referred to as "hydroquinone", or alternatively a bisphenol, etc. can be used as a nucleophilic co-monomer wherein the hydrogen atom from an aromatic hydroxyl group is deprotonated with a base such as NaOH, $Na_2CO_3$ or $K_2CO_3$, to form a nucleophile that then reacts with, e.g., a dihalobenzophenone such as 4,4'-DFBP, to form a PAEK polymer via a nucleophilic substitution mechanism, with the fluorine atoms of the 4,4'-DFBP acting as leaving groups. Processes for preparing PAEK polymers, including those using 4,4'-DFBP, can be found in, e.g., U.S. Pat. Nos. 3,953,400, 3,956,240, 3,928,295, and 4,176,222, all incorporated herein by reference.

Semi-crystalline poly(aryl ether ketone)s exhibit interesting properties as compared to their amorphous counterparts including, notably, excellent chemical resistance and good mechanical properties over a large temperature range. A semi-crystalline polymer is a polymer which crystallizes on cooling from the melt or from solution. The amount of crystallinity can be determined by different methods ("Crystallinity Determination", J. Runt, M. Kanchanasopa, "Encyclopedia Of Polymer Science and Technology", Online Ed, 2004), Wide Angle X-Ray diffraction (WAXD) or Differential Scanning Calorimetry (DSC) are two common methods used to determine crystallinity. By DSC, the reference (Blundell et al., Polymer, 1983, V 24, P 953) is that a fully crystalline PEEK exhibits an enthalpy of fusion of 130 J/g. Semi-crystalline PAEK have crystallinity levels of above 5 %, preferably above 10 % as measured by WAXD or by DSC.

Ultimate mechanical properties of semi-crystalline resins are in particular linked to the crystallinity level. A high level of crystallinity is thus important to maintain these properties. Other important properties of PAEK and PEEK polymers are their color, molecular weight distributions, shear thinning properties in the melt, and melt stability.

Semi-crystalline PAEK polymers, which have gained wide commercial acceptance due to their increased chemical resistance properties, often have different monomer purity requirements from amorphous PAEK. A semi-crystalline polymer is a polymer which crystallizes on cooling from the melt or from solution.

PEEK is a commercially significant semi-crystalline poly (ether ether ketone) with high temperature and chemical resistance. PEEK polymers predominantly comprise repeat units having the structure

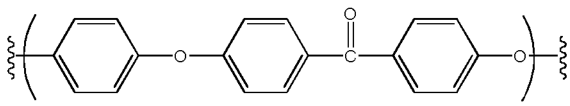

The preferred manufacturing process for PEEK is a nucleophilic polycondensation between 4,4'-difluorobenzophenone (DFBP) and hydroquinone in a high temperature solvent like diphenyl sulfone. Commercial PEEK prepared by a nucleophilic route is sold under the Ketaspire® trade name, but also under the Victrex® and Vestakeep® trade names. A key attribute for the commercial PEEK resins is consistency in physical properties, such as consistent mechanical properties in the solid state, consistent flow properties in the melt, and consistent appearance (color). These properties result from the combination of polymer microstructure and morphology, and/or molecular weight distribution. See for example an article by, A. R. Cooper in "Molecular Weight Determination" in "Encyclopedia of Polymer Science and Technology", Vol 10, 445- 469, Online Ed. 2004, John Wiley & Sons, hereby incorporated by reference herein in its entirety.

For example, higher degree of crystallinity can be correlated with the number average molecular weight, $M_n$ i.e. the lower the $M_n$ the higher the degree of crystallinity. The shear thinning properties of the flowing molten polymer melts, on the other hand, are correlated more strongly with the higher order average molecular weights ($M_w$ = weight average molecular weight, Mz = z-average molecular weight, etc). See for instance C. K Schoff and P. Kamarchik Jr. in "Rheological Measurements" in "Encyclopedia of Polymer Science and Technology", Volume 11, 473-547, Online Ed. 2004, John Wiley & Sons, Ratios of the different molecular weight average values provide insight into the molecular weight distribution.

Notably, Mz/Mw ratio can be correlated to the shear thinning properties of the polymer. For example, it can be desirable to have a polymer of high degree of crystallinity but also present sufficient melt strength and/or shear thinning to avoid flashing during molding, so an atypically high ratio of Mz/Mw can be desirable.

The ability to simply and consistently control the molecular weight distributions and molecular microstructure of the polymer, and their related solid morphology, melt properties, and color, and to predictably and consistently adapt and/or modulate them to the requirements of particular end use application is thus of important commercial value, but remain a long felt yet unmet need in the art.

Many processes for producing the 4,4'-DFBP monomer for making PAEK and PEEK polymers are known in the art. It is believed that some commercial producers of 4,4'-DFBP employ processes that are disclosed in or similar to those disclosed in EP 0 004 710 published 17 October 1979, hereby incorporated herein by reference in its entirity. EP 0 004 710 teaches that 4,4'-diamino-diphenylmethane can be treated with a mixture of nitrite salts and hydrofluoric acid to diazotize the amine groups, as shown below.

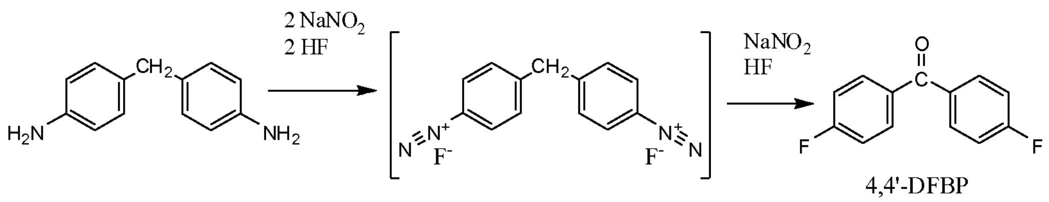


4,4'-DFBP

EP 0 004 710 teaches that in some of its embodiments, diazotization can be followed by isolation of the bis diazonium salt shown in the diagram (or perhaps other intermediates), then subsequent oxidation of the methylene group to a carbonyl group, but that in other embodiments the thermal displacement of the diazonium groups by fluoride and further oxidation of the methylene group by additional nitrite occur simultaneously. EP 0 004 710 does not address the issue of any impurities in the 4,4'-DFBP produced by its processes, or the potential for formation of organic nitro compounds as impurities by its processes or any effect of such impurities on the downstream polymers made from the 4,4'-DFBP.

It is however generally known and/or taught in the art that purified starting materials are preferred in the chemical synthesis of many complex molecules, including the synthesis of PAEK polymers.

U.S. Patent No. 5,777,172 is directed to a process for making 4,4'-DFBP, notes the utility of 4,4'-DFBP for making PEEK polymer, and notes that "it is essential to start with relatively pure 4,4'-DFBP, which is substantially free from the other positional isomers. Furthermore the 4,4'-DFBP, to be suitable for use in high performance polymers, must be substantially free from coloured impurities and polymeric by-products." The '172 patent did not however disclose or suggest the presence of any organic nitro compounds or other oxidizing impurities in 4,4'-DFBP, or their effects, positive or negative, on polymerization reactions to produce PEEK polymers.

WO2007/144610 and/or WO2007/144615 generically described the use of monomers having a purity of at least 99.7 area %, including 99.9 area % (as measured by gas chromatography), as providing improved melt flow index in the product polymer. It should be noted that a material that is 99.9 % pure contains 1000 ppm of one or more impurities. However, these patent publications remain silent on the nature and amount of specific impurities to be avoided. In addition, measurement of monomer purity by GC area % leads only to an incomplete analysis of the purity level of the monomers and is nonspecific with regard to the type and amount of any specific impurities to be avoided.

U.S. Patent No. 6,274,770 is directed to processes for making 4,4'-DFBP monomer for preparing PAEK polymers. In discussing the prior EP 0 004 710 patent, the '770 patent comments that EP 0 004 710 discloses a process for oxidizing 4,4'-difluorodiphenylmethane to 4,4'-DFBP by nitric acid oxidation. The '770 patent comments that "Problems associated with this process include...undesirable nitrogen oxide byproducts of the reaction," but does not comment further on the nature or identity of the "nitrogen oxide byproducts" produced by the EP 0 004 710 process, which presumably include the gaseous nitrogen oxides (such as $N_2O$) known to be produced stoichiometrically by the use of nitrous oxides and/or nitric acid as a oxidant. The '770 patent does not specifically identify organic nitro compounds or any other oxidizing impurities in the final 4,4'-DFBP product as being problematic.

A paper by Salazkin et al., (Russian Chemical Bulletin, Int. Ed. 50(7) 1208-1213, 2001) was titled "Influence of Isomerism of Difluorobenzophenone on the Synthesis and Properties of Poly(arylene ether ketones," and disclosed in its abstract that "A high content of an admixture of the 2,4'-isomer in 4,4'-difluorobenzophenone decreases the molecular weight of related poly(arylene ether ketones...." The Salazkin paper also commented that "It is known that the presence of admixtures in monomers used for polycondensation can substantially effect the results of polycondensation and properties of the polymer obtained." The Salazkin paper did not however disclose or suggest the presence of any organic nitro compounds or other oxidizing impurities in the 4,4'-DFBP.

SUMMARY OF THE INVENTION

As will be disclosed in more detail below, the Applicants have discovered that 4,4'-difluorobenzophenone (4,4'-DFBP), produced by certain commercial processes like those described in EP 0 004 710, involving use of nitrite salts and acids to make diazonium salts, and/or an oxidation step can contain trace concentrations of one or more oxidizing species in the 4,4'-DFBP obtained. Various oxidizers are known to achieve the transformation of the intermediate 4,4'-difluorodiphenylmethane into 4,4'-DFBP, notably nitric acid, nitrous acid, nitrite salts, alkyl hydroperoxides, hydrogen peroxide, bromine, high valence metals like Ce (IV), Cr ( VI), etc. These oxidizers can produce and/or contain trace concentrations of one or more oxidizing species in the final 4,4'-DFBP product, such as for example organic nitro compounds, peroxides, residual metals, etc. In particular nitrogen-containing oxidizers (such as $HNO_2$ or $HNO_3$) can produce organic nitro compounds. Organic nitro compounds can also be formed during the formation of diazonium salts (first step in EP0004710) by nitrodediazoniation. Applicants have discovered that such trace oxidizing species can be collectively analyzed at trace levels via an analytical method employing $Ti^{3+}$ compounds as a reducing agent for trace oxidizing species. The resulting $Ti^{3+}$ based analytical methods provide reliable detection and quantitation of the trace total concentrations such oxidizing species, down to concentrations of about 1.5 $\mu$mol of $TiCl_3$ oxidized during the $TiCl_3$ redox analysis per gram of analyzed 4,4'-difluorobenzophenone.

Applicants have also utilized additional chromatographic/spectroscopic analytical techniques, and/or combustion analysis for nitrogen, to confirm that at least a significant portion of the trace oxidizing species collectively detected by the $Ti^{3+}$ based analytical method can comprise a variety of nitro compounds, as will be further discussed below. Such nitro compounds can be collectively reduced under the conditions of the $Ti^{3+}$ based analytical method. Thus, it is an object of the invention to provide analytical methods that can collectively and/or individually detect and accurately quantitate very small concentrations of such oxidizing species and/or compounds comprising nitro groups in 4,4'-difluorobenzophenone.

Importantly, Applicants have discovered that the trace concentrations of the oxidizing species and/or nitro compounds that can be present in 4,4'-DFBP, at concentrations as low as about 1.5 $\mu$mol of $TiCl_3$ oxidized per gram of analyzed 4,4'-difluorobenzophenone, and/or down to about 11 mg of nitro groups per kilogram of 4,4'-DFBP. Moreover, even these very small concentrations, such oxidizing species in 4,4'-DFBP can have an unexpectedly large impact on the color, molecular weight distributions, and physical and shear thinning properties of PAEK and PEEK polymers produced from 4,4'-DFBP comprising the oxidizing and/or nitro impurities, and the consistency of being able to modulate and reproduce the desired physical properties when the oxidizing species and/or organic nitro compound impurities are present. Thus it is an object of the invention to provide processes for making PAEK and PEEK polymers that control or modulate the concentrations of the oxidizing and/or nitro impurities in the starting 4,4'-DFBP, in order to control or modulate the resulting properties of the polymers produced, and/or produce new polymers with modulated and/or controlled properties.

Additionally, Applicants have unexpectedly discovered that by analysing and modulating the concentration of the oxidizing species and/or organic nitro compounds in 4,4'-DFBP, they can predictably modulate and/or tailor the color and/or physical and shear thinning properties of product PAEK and PEEK polymers for individual end use applications. Accordingly, it is an object of Applicants' invention to improve the consistency of the color and/or physical properties of the PAEK and PEEK polymers produced.

Furthermore, Applicants have invented and/or developed methods for producing and supplying 4,4'-difluorobenzophenone comprising small and controlled concentrations of oxidizing species and/or nitro compounds to a poly(aryl ether ketone) manufacturer, in order to enable the preparation of PAEK and PEEK polymers having novel, improved,

and/or controlled properties.

BRIEF DESCRIPTION OF THE DRAWINGS

For a detailed description of the invention, reference will now be made to the accompanying drawing in which :

**Figure 1** is a graph of PEEK polymer color (as measured by the lightness L* as compared to a standard of similar molecular weight, Delta L*) as a function of the concentration of oxidizing species in the 4,4'-DFBP monomer used to prepare the PEEK polymer (as measured by $TiCl_3$ back titration analysis of the 4,4'-DFBP monomer).

**Figure 2** is a graph of PEEK polymer melt viscosity ratio ($Log_{10}$ $MV_{100}$ - 2 $log_{10}$ $MV_{10000}$) as a function of concentration of oxidizing species in the 4,4'-DFBP monomer used to prepare the PEEK Polymer (as measured by $TiCl_3$ back titration analysis of the 4,4'-DFBP monomer).

**Figure 3** is a graph of PEEK polymer melt viscosity ratio ($Log_{10}$ $MV_{100}$ - 2 $log_{10}$ $MV_{10000}$) as a function of the concentration of 4-fluoro-4'-nitrobenzophenone impurity in 4,4'-DFBP used to prepare the PEEK Polymer (as measured by GC analysis of the 4,4'-DFBP monomer).

**Figure 4** is a graph of PEEK polymer melt viscosity ratio ($Log_{10}$ $MV_{100}$ - 2 $log_{10}$ $MV_{10000}$) as a function of the concentration of nitrogen in 4,4'-DFBP monomer (mg/kg, as measured by combustion/chemiluminscence of the 4,4'-DFBP monomer) used to prepare the PEEK Polymer.

**Figure 5** is a graph of PEEK polymer molecular weight distribution key parameter (as measured by the ratio of Mz/Mw determined by gel permeation chromatography) as a function of the concentration of oxidizing species in the 4,4'-DFBP monomer used to prepare the PEEK polymer (as measured by $TiCl_3$ back titration analysis of the 4,4'-DFBP monomer).

**Figure 6a** shows a potentiometric titration curve (millivolts potential vs. milli-liters of ferric ammonium sulphate) from a back titration of excess $TiCl_3$ (remaining after reduction of a model 3,3'-dinitrobenzophene compound with $TiCl_3$) with ferric ammonium sulphate, a crucial portion of Applicants' $TiCl_3$ back titration analytical method.

**Figure 6b** shows a potentiometric titration curve (millivolts potential vs. milli-liters of ferric ammonium sulphate) of a back titration of a blank solution with ferric ammonium sulphate, a portion of Applicants' $TiCl_3$ back titration analytical method.

DETAILED DESCRIPTION OF THE PREFERRED EMBODIMENTS

Many aspects and other features or embodiments of the present invention will be set forth in part in the description that follows, as will become apparent to those having ordinary skill in the art upon examination of the following or may be learned from the practice of the present invention. The advantages of some aspects or embodiments of the inventions described herein can be realized and obtained as particularly pointed out in the appended claims. As will be realized, the present invention is capable of other and different embodiments, and its several details are capable of modifications in various obvious respects, all without departing from the present invention. The description below is to be regarded as illustrative in nature, and not as restrictive.

**Oxidizing Species and/or Organic Nitro Compound Impurities in 4,4'-DFBP**

Many processes for preparing 4,4'-DFBP monomer are known. At least some commercial manufacturers of 4,4'-DFBP are believed to employ processes for making 4,4'-DFBP that employ amines as starting materials (Schiemann-type processes, such as disclosed in EP 0 004 710). In many embodiments of such processes, each reaction step is carried out separately with isolation and/or purification of intermediates, and each reaction step can be carried out in a variety of ways, with a variety of reagents. See for example the general reaction scheme shown below :

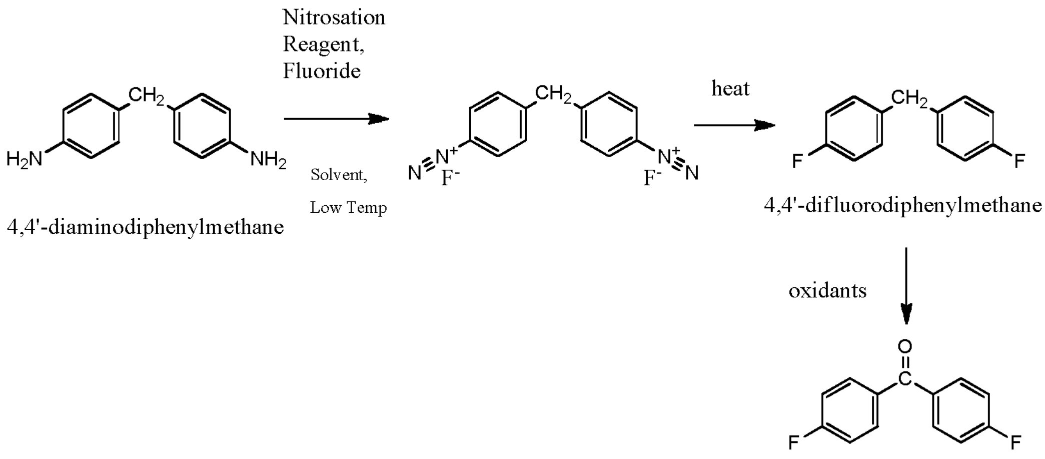


4,4'-diaminodiphenylmethane

4,4'-difluorodiphenylmethane

4,4'-DFBP

In such "traditional" reaction sequences, 4,4'-diaminodiphenylmethane is first converted to its corresponding bis-diazonium fluoride salt. A wide variety of potential nitrosation reagents and fluoride sources can be used, as further described hereinbelow, as can a wide variety of solvents, and because the bis-diazonium fluoride salts are thermally sensitive, the reaction can be carried out at low temperatures, especially if isolation of the diazonium salts is desired. In many embodiments of such diazotization reactions, aqueous hydrogen fluoride can be used as the solvent, and sodium nitrite is added to generate nitrosation reagent in-situ, i.e. nitrous acid.

After the bis-diazonium fluoride salt has been generated, it can be gently heated (to about 40°C or higher, up to about 100°C) to induce thermal displacement of the diazonium groups by fluoride, to generate 4,4'-difluorodiphenylmethane, which can be readily isolated and optionally purified by many possible methods known to those of ordinary skill in the art, such as distillation, crystallization, sublimation, and the like.

The methylene group of the 4,4'-difluorodiphenylmethane can then be oxidized to a carbonyl group by any of a wide variety of methods and/or oxidants, including as further described hereinbelow. Suitable oxidants can include oxygen or air in the presence of catalysts, nitric acid, nitrous acid, nitrite salts, alkyl hydroperoxides, hydrogen peroxide, bromine, high valence metals like Ce (IV), Cr (VI), etc. Such stepwise methods are described in detail in EP 0 004 710, Example 2, hereby incorporated herein by reference.

Alternatively, in alternative procedures, all the reaction steps may be combined into a "one-pot" procedure, as exemplified by Examples 1 and 3 of EP 0 004 710, as schematically shown below :

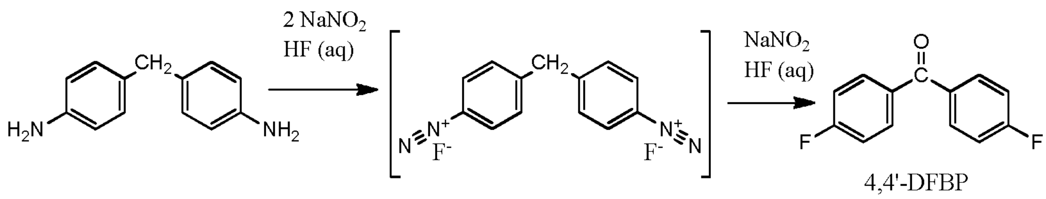


4,4'-DFBP

In these one-pot procedures, 4,4'-diaminodiphenylmethane is initially diazotized by dissolving it in aqeous HF as a solvent, and diazotized by addition of sodium nitrite at low temperature, then additional sodium nitrite oxidant either already present or added, accompanied by heating, effects the combination of fluoride displacement of the diazo groups, and oxidation of the methylene group, to produce the end product 4,4'-DFBP. The exact sequence of the fluoride displacement and oxidation steps is not known in such one pot procedures.

The Applicants have discovered, after painstaking chromatographic / spectroscopic separation and analysis of several independent sources of 4,4'-DFBP, that 4,4'-DFBP from suppliers that are believed to employ such procedures can contain trace concentrations of organic nitro compounds as impurities. The most concentrated of the organic nitro compound impurities found in the commercial 4,4'-DFBP samples examined had the structure shown below :

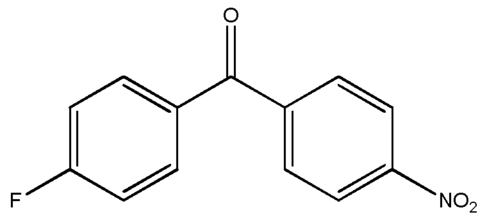

4-fluoro, 4'-nitrobenzophenone

Nitro Impurity 1

Applicants have also discovered that the Nitro Impurity 1 shown above can be detected and quantitated in commercial samples of 4,4'-DFBP samples by gas chromatography, in concentrations as high as about 585 ppm GC area of 4,4'-DFBP in some samples.

While not wishing to be bound by theory or speculation, the formation of organic nitro compounds as an impurity is perhaps understandable in light of the report by Begal et al, (J. Org. Chem. USSR, Vol 5, 1767-1774) that nitrite anions can displace some of the diazonitrite intermediates believed to be involved in the diazotization reactions of substituted benzenes, to form nitro-arene compounds.

Similarly, Applicants have also isolated via chromatography and identified via spectroscopic methods small quantities of other organic nitro compounds from various 4,4'-DFBP samples, such as the "dimeric" trifluoro-nitro compound whose structure is show below.

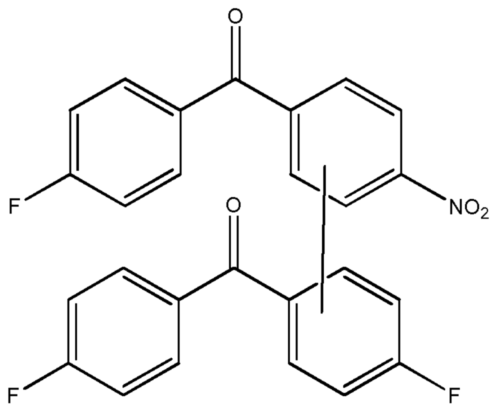

nitro, trifluoro-bisbenzophenone

Nitro Impurity 2

Other organic nitro compound impurities isolated and identified from commercial samples of 4,4'-DFBP include the following :

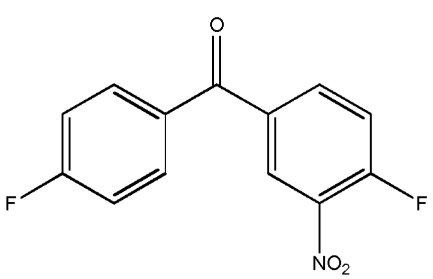

Nitro Impurity 3

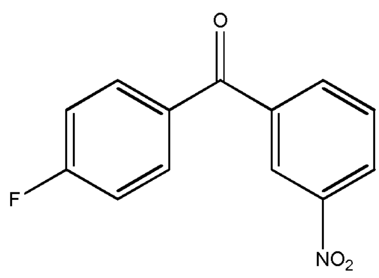

Nitro Impurity 4

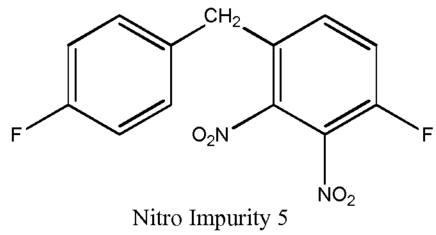

Nitro Impurity 5

Please note that these impurities cannot all be directly detected and quantified using standard chromatographic techniques. Only Nitro Impurity 1 can be directly detected by GC. However, because the potential presence of such organic nitro compounds has not been previously detected and/or disclosed in the prior art, and/or because of the low individual concentrations of such impurities (all below 0.3 % by weight), the prior art has not disclosed the presence and/or the effects of such trace oxidizing species on the properties of PAEK and PEEK copolymers. The mechanism or mechanisms by which such nitro impurity compounds, singly or together, affect the properties of the PAEK polymers is not known.

Furthermore, until now, it has been very difficult to individually identify, let alone control or modulate the effects of such oxidizing species on copolymerization reactions to make PAEK or PEEK polymers.

**Methods for Analyzing Oxidizing Species in 4,4'-DFBP by $Ti^{3+}$ Reduction**

The Applicants have now developed methods for the collective analysis of trace oxidizing species and/or organic nitro compounds in 4,4'-DFBP samples.

Searches of the prior art showed that redox titration analysis of bulk organic nitro compounds have been disclosed, employing direct reduction / titration the nitro groups of organic nitro compounds to the corresponding amines, using $Ti^{3+}$ salts in acidic solutions, according to the equation :

$$R\text{-}NO_2 + 6\ Ti^{+3} + 6H^+ \rightarrow R\text{-}NH_2 + 6\ Ti^{+4} + 2\ H_2O$$

wherein "R" is a carbon-containing organic radical, and the $Ti^{+3}$ reducing compounds, which provide one electron per $Ti^{3+}$ ion oxidized, can be a variety of $Ti^{+3}$ compounds or salts, including $TiCl_3$. Reduction of the organic nitro groups to the corresponding amines is described in the prior art as being a six electron reduction process that proceeds in three stages :

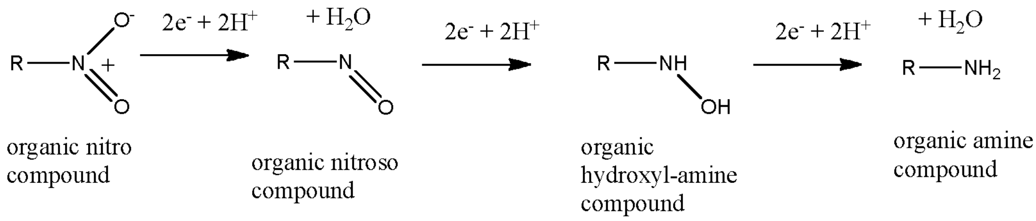


In the early prior art such analytical methods were conducted in acidic solutions (such as acetic acid), but heating of the solutions was required (to speed reduction of the nitro groups). Excess remaining $Ti^{3+}$ salts were then back titrated with ferric ions (as shown in the equation below) in the presence of a thiocyanate indicator, see for example. Knecht et al., Ber. Dtsch. Chem. Ges. 36, 166 (1903).

$$Ti^{+3} + Fe^{+3} \rightarrow Ti^{+4} + Fe^{+2}$$

Subsequently, alkaline buffer systems for such titrations, employing sodium citrate or sodium acetate were developed that significantly accelerated the rate of reaction of $Ti^{3+}$ ions with nitro compounds, see T. S. Ma and J. V. Early, Mikrochim. Acta 1959:129. However, those prior art titration methods were not reported to have been extended to analysis of trace oxidizing species in bulk organic compounds, and were not updated for use in modern potentiometric titration equipment without the use of indicators. Neither was it clear whether or not such prior art analytical methods, which employ $Ti^{3+}$ as a reducing agent, could be employed in the presence of other reducible groups, such as for example the potentially reducible ketone group of a benzophenone such as 4,4'-DFBP.

Applicant's need for information on the total of trace oxidizing species in 4,4'DFBP motivated them to seek

and/or develop new and useful analytical methods for measuring the total concentration of oxidizing species in 4,4'DFBP. Applicants have discovered and developed such new analytical methods, which have many embodiments and/or variations, the scope of which are described and claimed below.

Applicants' new discoveries encompass a variety of related analytical methods for estimating the total concentration of the various oxidizing species reducible by $Ti^{3+}$ compounds present in 4,4'-difluorobenzophenone, wherein the various embodiments of the methods comprising at least the steps of:

a) preparing a 4,4'-difluorobenzophenone sample solution by contacting a measured quantity of 4,4'-difluorobenzophenone that may comprise one or more oxidizing species, one or more solvents, and a pH buffer, to form at least some of a sample solution within a measurement vessel,
b) reducing the oxidizing species present in the sample solution with an excess initial quantity of at least one $Ti^{3+}$ compound,
c) measuring the quantity of excess $Ti^{3+}$ compounds remaining in the sample solution after the reduction of the oxidizing species, by back-titrating the sample solution after the reduction of the oxidizing species with an oxidant for the excess $Ti^{3+}$ compounds, and
d) calculating the quantity of $Ti^{3+}$ compounds used to reduce oxidizing species in the 4,4'-difluorobenzophenone, and
e) optionally relating the quantity of $Ti^{3+}$ compounds used to reduce oxidizing species in the 4,4'-difluorobenzophenone to the concentration of oxidizing species in the 4,4'-difluorobenzophenone by assuming that each mole of $Ti^{3+}$ compound provides one mole of electrons for the reduction of the one or more oxidizing species.

The Applicants' analytical methods are often and conveniently implemented in the form of titration methods, especially potentiometric titration methods. Applicants' analytical methods are unexpectedly useful and suitable for the selective analysis and quantitation of the total concentration of the various oxidizing species that can be present as trace impurities in aromatic ketone monomers such as 4,4'-DFBP.

The specific identities of all the oxidizing species in 4,4'-DFBP samples are not known, but the oxidizing species can at least include one or more organic nitro compounds, one or more organic nitroso compounds, one or more organic hydroxylamine compounds, or one or more inorganic nitrite salts. Without wishing to be bound by theory, based on experiments involving spiking known organic nitro compounds into 4,4'-DFBP, and Applicants believe that the predominant oxidizing species present in the commercial 4,4'-DFBP samples examined are mixtures of organic nitro compounds, including the one or more of the Nitro Impurities 1-5 described above.

The $Ti^{3+}$ compounds employed in the inventive analytical methods are sufficiently thermodynamically strong reducing agents to reduce and thereby detect a variety of oxidizing species potentially present in the aromatic ketone monomers, including organic nitro compounds. However, the Applicant has found that under some conditions of pH and/or temperature, and/or at long reaction times, $Ti^{3+}$ compounds can also slowly reduce ketone groups, including the ketone group of 4,4'-DFBP itself. To overcome the potential interference from reduction of the ketone groups of 4,4'-DFBP, which are not intended to be considered "oxidizing species" for purposes of this document, Applicants invented the "indirect" or "back-titration" analytical methods described and/or claimed herein.

In the first step of Applicants' analytical methods, a 4,4'-difluorobenzophenone sample solution is prepared by contacting a measured quantity of 4,4'-difluorobenzophenone that may comprise one or more oxidizing species, and one or more solvents, and a pH buffer to form at least some of a sample solution, which is placed in a suitable reaction vessel.

The measured quantity of 4,4'-difluorobenzophenone can vary and could be any amount, typically accurately weighed, provided the quantity chosen can be substantially dissolved in a reasonable amount of a suitable solvent, to produce a solution that can be contained in the suitable reaction vessel, which is typically closed so as to allow the exclusion of oxygen and/or air. Typically, the measured quantity of 4,4'-difluorobenzophenone to be analyzed is between about 0.1 and about 10 grams, and more typically, is selected to be between about 0.5 and 3.0 grams.

The term "solvent" used in connection with Applicants' analytical methods encompasses both pure single solvents and mixtures of solvents. The solvent typically comprise at least one liquid polar organic solvent capable of dissolving both substantial quantities of 4,4'-DFBP and the pH buffer. Examples of suitable polar organic solvents can include acetone, acetonitrile, ethanol, methanol, and the like, or mixtures thereof. The solvent also typically comprises water. Preferably, the solvent is a mixture of methanol and water.

The pH of the sample solution can strongly influence the absolute and relative rates of $Ti^{3+}$ reduction reactions, of both of the intended oxidizing species (such as organic nitro compounds), and the interfering reduction of ketone groups of the 4,4'-DFBP. Increasing pH seems to increase the reductive power and speed of the $Ti^{3+}$ compounds. Mildly acidic pHs produce a good balance between fast reaction rates, with selective reduction of the oxidizing species and/or organic nitro compounds, without inducing significant interfering reduction of the ketone groups of 4,4'-DFBP. Accordingly, the pH of the sample solution is advantageously between about 4 and 7, or preferably, between about 5 and about 6. Most preferably, the pH of the sample solution is about 5.4.

The sample solutions therefore typically comprise a pH buffer, in order to maintain the pH within the optimal ranges during the selective reduction of the oxidizing species with the $Ti^{3+}$ salts. In many embodiments the pH buffer comprises a mixture of a carboxylic acid and a salt thereof, such as acetic acid and a salt of acetic acid. In many embodiments, the pH buffer comprises a mixture of acetic acid and sodium acetate, preferably comprising about 40 % by weight of sodium acetate.

Because solutions of $Ti^{3+}$ compounds or salts can often be oxidized by $O_2$ in air, steps b and c are generally conducted in the substantial absence of oxygen. In order to achieve the substantial absence of oxygen, the reaction and measurement vessels, and storage vessels for the solutions of the $Ti^{3+}$ compounds are closed to air and then purged or sparged with inert gases that contain little or no oxygen, such as for example nitrogen, argon, or the like. In many embodiments of the methods, the measurement vessel is blanketed or sparged with an inert gas to reduce the concentration of oxygen gas in the vessel.

In the second step of Applicants' analytical methods, the oxidizing species present in the sample solution are reduced by the addition an excess initial quantity of at least one or more $Ti^{3+}$ compounds (relative to the quantity of oxidizing species in the sample solution). An excess initial quantity of at least one or more $Ti^{3+}$ compounds is considered to be an amount of $Ti^{3+}$ compounds that is at least somewhat higher than that required to completely reduce the oxidizing species in the sample solution, with the result that during the back titration step of the analytical procedure (step c), at least some oxidant is required in order to consume the excess $Ti^{3+}$ compounds remaining after complete reduction of the oxidizing species.

$TiCl_3$ is a preferred $Ti^{3+}$ compound for use in the Applicants' analytical methods, and in many embodiments of the analytical methods, the one or more $Ti^{3+}$ compounds consist essentially of $TiCl_3$. When $TiCl_3$ is used as a $Ti^{3+}$ compound, the presence of a suitable excess of $TiCl_3$ normally induces a yellow/green color in the sample solution.

In step b, the excess initial quantity of at least one or more $Ti^{3+}$ compounds is normally added in the form of an $O_2$-free aqueous stock solution of known concentration. Small amounts of additional acids, such as HCl, can be added to the solutions of the $Ti^{3+}$ compounds. The initial concentration of the $Ti^{3+}$ compounds in the stock solutions can be measured and/or confirmed by their separate titration with a standard oxidant, such as for example ferric ammonium sulphate decahydrate.

After addition of the excess initial quantity of at least one or more $Ti^{3+}$ compounds to the sample solution, the resulting solution is allowed to react, typically at ambient temperature, for a time long enough to completely reduce the oxidizing species and/or nitro compounds, but short enough to prevent significant undesirable reduction of the ketone groups of 4,4'-DFBP. When $TiCl_3$ is used as a $Ti^{3+}$ compound in the analytical methods of the invention, the reduction reactions are allowed to proceed for about 10 minutes. In many embodiments of the analytical methods of the invention, an additional external acid is added to the sample solution before the quantity of excess $Ti^{3+}$ compounds is measured, which substantially overwhelms the buffer capacity of the titration solution and significantly lowers the pH and effectively terminate the reduction of oxidizing species in the titration solutions. Although many acidic compounds could be used for such purposes, HCl is a particularly advantageous acid for terminating the reduction reactions.

After the reduction of the oxidizing species by $Ti^{3+}$ compound has concluded, the quantity of excess $Ti^{3+}$ compounds remaining in the sample solution after the reduction of the oxidizing species is measured in step (c) by back-titrating the sample solution, after the reduction of the oxidizing species, with an oxidant for the remaining $Ti^{3+}$ compounds. The number of moles of oxidant consumed in such back titration procedures is stoichiometrically related to the number of moles of excess $Ti^{3+}$ compounds remaining in the sample solution after the reduction of the oxidizing species, from which information it is possible to calculate the moles of $Ti^{3+}$ compounds that originally reduced oxidizing species in the sample solutions.

Potentiometric titrations, which measure the solution potential between a working electrode and a reference electrode, as a means of detecting the status of the oxidation of the remaining $Ti^{3+}$ compounds with the oxidant, can be used as a means for detecting and/or for monitoring the back titration. In many embodiments of Applicants methods, the potentiometric titrations employ platinum as a working electrode and a glass membrane as reference electrode.

Many oxidants for the $Ti^{3+}$ compounds could be employed for measuring the quantity of excess $Ti^{3+}$ compounds remaining in the sample solution after reduction of the oxidizing species. In many embodiments of Applicants back titration methods, the oxidant is an iron(III) compound. In many embodiments of Applicants back titration methods, the oxidant is ferric ammonium sulphate, $Fe(NH_4)(SO_4)_2$, which is readily commercially available in high purity form.

From the difference of the moles of the excess $Ti^{3+}$ compounds added to the sample solution, and the moles of oxidant consumed to oxidize the excess $Ti^{3+}$ compounds remaining in the sample solution after the reduction of the oxidizing species, it is possible to calculate the quantity of $Ti^{3+}$ compounds used to reduce oxidizing species in the 4,4'-difluorobenzophenone, which can be employed as a relative collective measure of the quantity of the oxidizing species in the 4,4'-DFBP itself.

It is also possible to obtain an estimate of the total absolute quantities and/or concentrations of the oxidizing species in the 4,4'-DFBP, by relating the quantity of $Ti^{3+}$ compounds used to reduce oxidizing species in the 4,4'-difluorobenzophenone during the titration to the concentration of oxidizing species in the 4,4'-difluorobenzophenone by

assuming that each mole of $Ti^{3+}$ compound provides one electron for the reduction of the one or more oxidizing species. For example, as noted above organic nitro compounds are believed to constitute the predominant oxidizing species in many commercially available samples of 4,4'-DFBP. Since it requires six electrons to completely reduce organic nitro groups to organic amine groups, an upper estimate of the concentration of nitro ($NO_2$) groups in the 4,4'-DFBP is one sixth the quantity of $Ti^{3+}$ compounds used to reduce oxidizing species in Applicants' analytical methods.

Lastly, while Applicants' analytical methods comprise many variations and embodiments, which are broadly described and claimed herein, a particularly narrowed subset of those various embodiments have been found to be especially well suited for providing fast, accurate, and selective collective analysis of oxidizing impurities in 4,4'-DFBP. Such preferred embodiments provide preferred analytical methods for measuring an estimate of the concentration of one or more oxidizing species reducible by $Ti^{3+}$ compounds that are present in 4,4'-difluorobenzophenone, comprising the steps of

a) preparing a 4,4'-difluorobenzophenone sample solution by contacting a measured quantity of 4,4'-difluorobenzophenone that may comprise one or more oxidizing species, one or more solvents, and a pH buffer, to form at least some of a sample solution within a measurement vessel,
b) reducing the oxidizing species present in the sample solution with an excess initial quantity of at least one or more$Ti^{3+}$ compounds,
c) measuring the quantity of excess $Ti^{3+}$ compounds remaining in the sample solution after the reduction of the oxidizing species, by back-titrating the sample solution after the reduction of the oxidizing species with an oxidant for the remaining $Ti^{3+}$ compounds, and
d) calculating the quantity of $Ti^{3+}$ compounds used to reduce oxidizing species in the 4,4'-difluorobenzophenone, and
e) relating the quantity of $Ti^{3+}$ compounds used to reduce oxidizing species in the 4,4'-difluorobenzophenone during the titration to the concentration of oxidizing species in the 4,4'-difluorobenzophenone by assuming that each mole of $Ti^{3+}$ compound provides one electron for the reduction of the one or more oxidizing species.

wherein

a) steps b and c are conducted in the substantial absence of oxygen,
b) the solvent comprises methanol and water,
c) the pH buffer comprises acetic acid and a salt of acetic acid,
d) the one or more $Ti^{3+}$ compounds consist essentially of $TiCl_3$,
e) an acid is added to the sample solution before the quantity of excess $Ti^{3+}$ compounds is measured, and
f) the oxidant is ferric ammonium sulfate.

Such analytical methods comprising the preferred combinations of steps and elements recited immediately above are referred to in this specification, and in some of the attending claims, as a **"$TiCl_3$ back titration analysis"** method.

The $TiCl_3$ back titration analysis method is estimated to be capable of detecting and quantitating the total concentration of nitro groups from organic nitro compounds, contained as impurities in 4,4'-DFBP, down to a concentration of about 5-10 mg of nitro groups per kilogram of 4,4'-DFBP.

**PAEK Polymers**

The term "poly(aryl ether ketone)" (PAEK) as used herein includes any polymer of which more than 50 wt. % of the recurring units are recurring units ("R1") of one or more formulae containing at least one arylene group, at least one ether group (-O-) and at least one ketone group [-C(=O)-] and which are prepared using 4,4'-DFBP as a starting material.

The PAEK polymers of the various aspects of the present inventions can be formed by the nucleophilic co-condensation of 4,4'-DFBP with nucleophilic co-monomers comprising nucleophilic oxygen atoms, wherein the 4,4'-DFBP provided to the process comprises small concentrations of oxidizing species, such as for example organic nitro compound impurities.

Common "nucleophilic" monomers used in the synthesis of PAEK are typically di-hydroxylated aryl monomers such as p-hydroquinone (commonly known as "hydroquinone"), 4,4'-dihydroxybenzophenone, 4,4'-biphenol, 1,4-bis-(p-hydroxybenzoyl)benzene, 1,3-bis-(p-hydroxybenzoyl)benzene, etc. Such dihydroxylated monomers are usually reacted in the presence of bases that can deprotonate the hydroxyl groups, to generate arylene oxide anions "in situ," which typically highly nucleophilic, and react with the fluoride groups of the 4,4'-DFBP.

Preferably, recurring units (R1) for PAEK polymers related to the Applicants' inventions are chosen from :

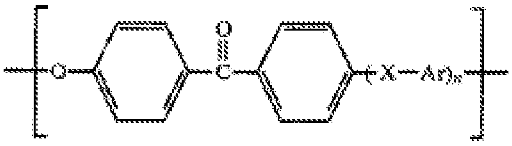

(I)

(II)

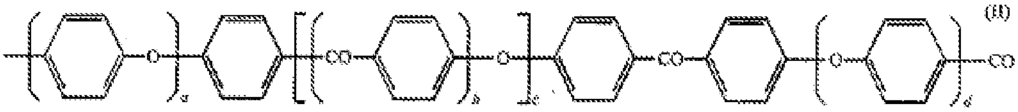

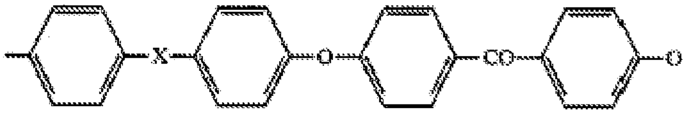

(III)

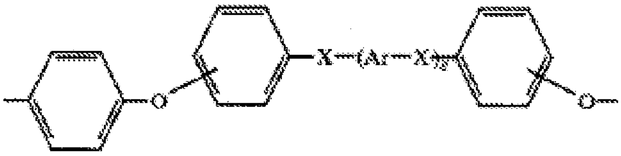

(IV)

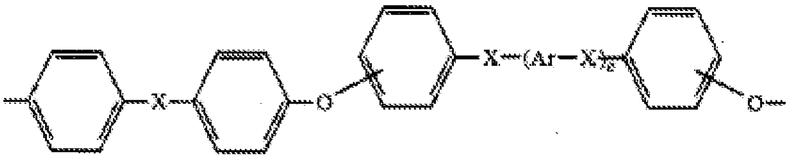

(V)

wherein Ar is independently a divalent aromatic radical selected from phenylene, biphenylene or naphthylene,
X is independently O, C(=O) or a direct bond,
n is an integer of from 0 to 3,
b, c, d and e are 0 or 1,
a is an integer of 1 to 4, and
preferably, d is 0 when b is 1.

More preferably, recurring units (R1) for PAEK polymers of Applicants' inventions are chosen from :

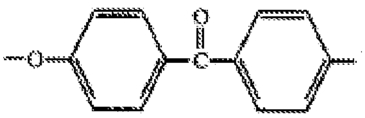

(VI)

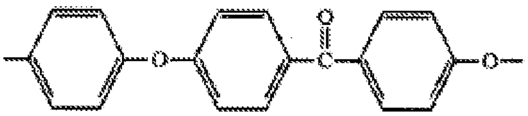

(VII)

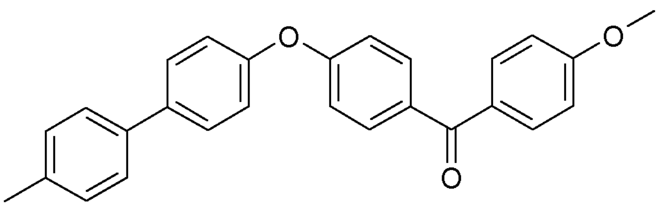

(VIII)

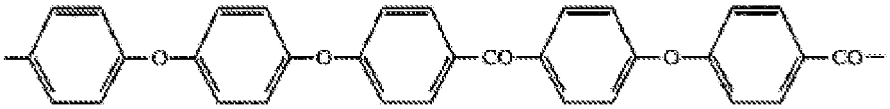

(IX)

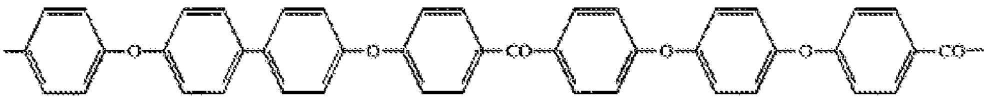

(X)

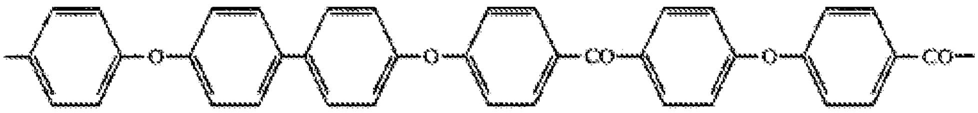

(XI)

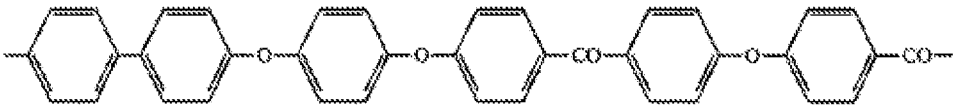

(XII)

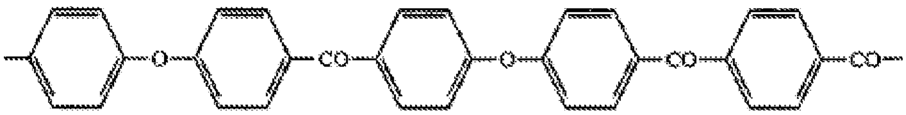

(XIII)

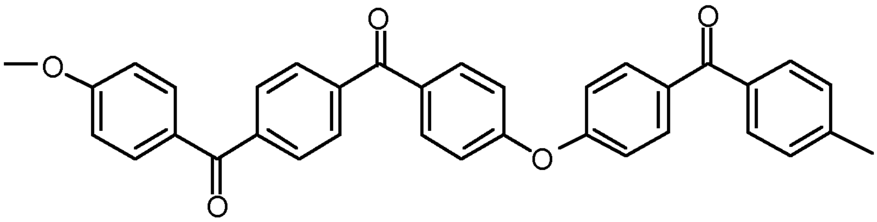

(XIV)

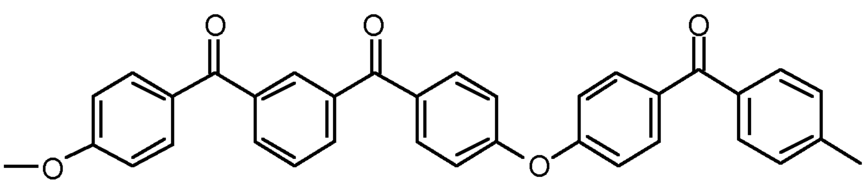

(XV)

Still more preferably, recurring (R1) for the PAEK polymers of the Applicants' inventions are chosen from :

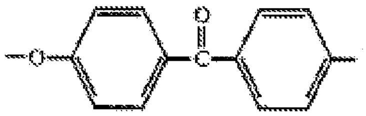

(VI)

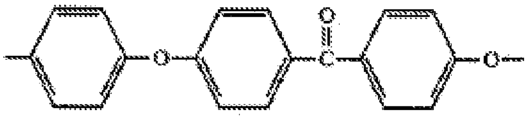

(VII)

and

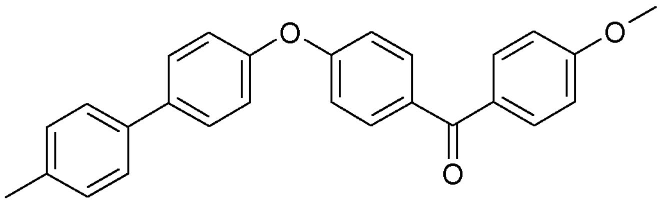

(VIII).

Most preferably, recurring units (R1) for the PAEK polymers of Applicants' invention are :

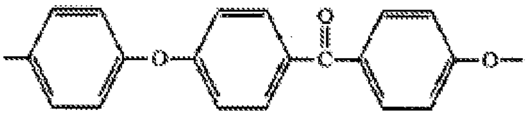

(VII)

**Poly(ether ether ketone) Polymers**

The generic term "poly(ether ether ketone)" as used herein includes any polymer of which more than 50 wt. % of the recurring units are recurring units (R1) of one or more formulae containing at least one arylene group, at least two ether groups (-O-) and at least one ketone group [-C(=O)-] and which was prepared using 4,4'-DFBP as a starting material. "Poly(ether ether ketone)" polymers can also comprise minor proportions of other repeating units, due to the intentional or unintentional presence of other comonomers or impurities during the polymerization reactions, or chain terminating end groups.

**PEK Polymers**

A PEK polymer is intended to denote any polymer of which more than 50 wt. % of the recurring units are recurring units (R1) of formula (VI).

**PEEK Polymers**

A PEEK polymer is intended herein to denote any polymer of which more than 50 wt. % of the recurring units are recurring units (R1) of formula (VII) shown above. In many embodiments, the various PEEK polymers described and/or claimed herein comprise much higher proportions of recurring units of formula (VII), such as for example more than 90 %, or 95 %, or 98 %, or 99 %, or 99.5 %, or 99.8 %, or 99.9 % of recurring units of formula (VII).

PEEK polymers can be and often are formed by the nucleophilic co-condensation of 4,4'-DFBP with hydroquinone, but can also comprise minor proportions of other repeating or chain terminating units, due to either the intentional or unintentional presence of other co-monomers or impurities during the polymerization reactions, or side reactions induced by the presence of those co-monomers or impurities.

The PAEK according to the present invention is preferably a semi-crystalline PAEK, or preferably a semi-crystalline PEEK. A semi-crystalline PAEK or PEEK is intended to denote a PAEK or PEEK featuring areas of crystalline molecular structure, but also having amorphous regions. In contrast with completely amorphous PAEKs, semi-crystalline

PAEKs have generally a melting point. Very often, the existence of a melting point is detected and the value of the melting point is measured by Differential Scanning Calorimetry, for example as reported in the examples. The melting point is advantageously determined by a certain construction procedure on the heat flow curve : the intersection of the two lines that are tangent to the peak at the points of inflection on either side of the peak define the peak temperature, namely the melting point. In accordance with the present invention, the semi-crystalline PAEK has a melting point advantageously greater than 150 °C, preferably greater than 250°C, more preferably greater than 300°C and still more preferably greater than 325°C.

A particularly preferred PAEK polymer prepared using the invention 4,4'-DFBP is a homopolymer of recurring units (R1) of formula (VII), i.e. a PEEK polymer of which almost all the recurring units of the poly(aryl ether ketone) are recurring units (R1) of formula (VII). This PEEK homopolymer preferably has a RV of between 0.50 and 1.40 ; more preferably between 0.60 and 1.30 and can be made using, e.g., the invention, 4,4'-DFBP comprising small amounts of organic nitro compounds, and p-hydroquinone. U.S. Pat. Nos. 3,953,400, 3,956,240, 3,928,295, and 4,176,222, and RE 34085, all incorporated herein by reference, generally disclose PAEK resins and methods for their preparation.

**Processes for Preparing the PAEK and PEEK Polymers**

The various novel PAEK and PEEK polymers of the Applicants' inventions can be, and in many embodiments are, formed by certain novel processes discovered by Applicants for producing such polymers, i.e. by the co-condensation of 4,4'-DFBP with hydroquinone and/or other nucleophilic co-monomers, wherein the 4,4'-DFBP provided to the process comprises small and/or controlled concentrations of oxidizing species, including nitro compound impurities, as specified in Claim 1.

The required small concentrations of oxidizing impurities in the 4,4'-DFBP can potentially result from a variety of well controlled processes for producing 4,4'-DFBP monomer, without the explicit need to measure and/or take intentional steps to measure and modulate the concentrations of the collective or individual concentrations of the oxidizing species. The oxidizing species in the 4,4'-DFBP provided to Applicant's claimed process, as described above, are collectively detected and/or measured by Applicants' "$TiCl_3$ back titration analysis" methods. Such active measurement of the concentrations of the oxidizing species can, in some embodiments, be employed by one of ordinary skill in the art to select or blend lots of 4,4'-DFBP, or selectively purify or modulate the concentrations of the oxidizing species, so as to actively and intentionally practice Applicants' claimed processes.

It has surprisingly been found that analysis and/or control of the concentrations of the oxidizing species and/or organic nitro compounds in 4,4'-DFBP can be used empirically to modify or improve the consistency of the morphological and physical properties of the PAEK or PEEK polymers produced, such as the polymer molecular weight distributions and/or color.

Accordingly, Applicants have invented and herein describe and/or claim various embodiments of processes for preparing a poly(aryl ether ketone), or a poly(ether ether ketone), or a PEEK, by

a) obtaining

i) 4,4'-difluorobenzophenone, and
ii) one or more nucleophiles, as specified in Claim 1,

b) and reacting the obtained 4,4'-difluorobenzophenone and the one or more nucleophiles, to form the poly(aryl ether ketone),

wherein the obtained 4,4'-difluorobenzophenone comprises a total concentration of one or more oxidizing species, as measurable by $TiCl_3$ back titration analysis of the obtained 4,4'-difluorobenzophenone, corresponding to between about 1.5 and about 80 $\mu$mol of $TiCl_3$ oxidized by the oxidizing species during the $TiCl_3$ back titration analysis per gram of obtained 4,4'-difluorobenzophenone.

In such processes for producing PAEK or PEEK polymers, and the claims therefore, the term "$TiCl_3$ back titration analysis", has the particular meaning defined in connection with Applicants' analytical methods, as described above.

In Applicants' processes for making PAEK or PEEK polymers and the claims therefore, alternative specific ranges of concentration of $TiCl_3$ can be oxidized by the oxidizing species during the analytical procedure for the provided 4,4'-DFBP, corresponding to differing ranges of total concentrations of oxidizing species in the provided 4,4'-DFBP, and related embodiments employing such alternative ranges are hereby explicitly contemplated herein. In these alternative embodiments of Applicants' processes, between about 1.5 and about 40 $\mu$mol of $TiCl_3$ are oxidized, or between about 1.5 and about 13 $\mu$mol of $TiCl_3$ are oxidized, or between about 13 and about 40 $\mu$mol of $TiCl_3$ are oxidized, or between about 13 and about 33 $\mu$mol of $TiCl_3$ are oxidized, during the $TiCl_3$ back titration analysis, per gram of provided 4,4'-difluorobenzophenone. In the lower ranges of oxidized species as measured by $TiCl_3$ back titration analysis, lower levels of polymer branching, and lighter color are typically observed in the product polymer. In the higher ranges of oxidized species as measured by $TiCl_3$ back titration analysis, increased polymer branching, shear thinning properties, and somewhat darker color are typically observed in the product polymer.

For purposes of brevity and clarity, the various embodiments of Applicants' processes described immediately above shall hereinafter be collectively termed "Applicants' processes for preparing PAEK polymers." It should be noted that the 4,4'-difluorobenzophenone "obtained" for use in Applicants' processes for preparing PAEK polymers can be obtained from a wide variety of either internal or external sources and/or manufacturing processes, as further described hereinbelow.

In Applicants' processes for preparing PAEK polymers, the total collective concentrations of oxidizing species in 4,4'-DFBP is measurable via $TiCl_3$ back titration analysis, but the identities of the individual oxidizing species are likely not all individually known. However, it is believed that the oxidizing species generally can comprise substantial amounts of nitro compounds, including at least one or more organic nitro compounds, one or more organic nitroso compounds, one or more organic hydroxyl amine compounds, or one or more inorganic nitrite salts, or mixtures thereof. The oxidizing species can predominantly comprise at least one or more organic nitro compounds. Examples of such organic nitro compounds that have been isolated from 4,4'-DFBP include :

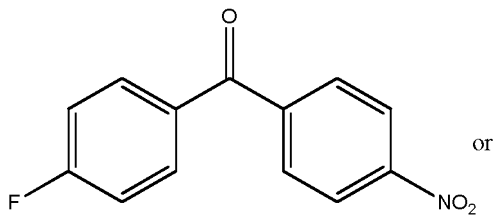

or

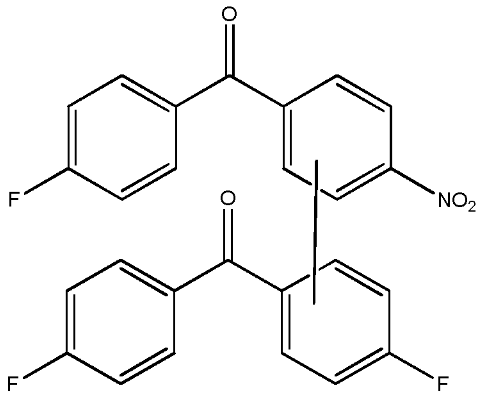

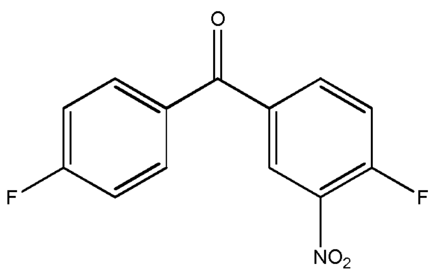

or

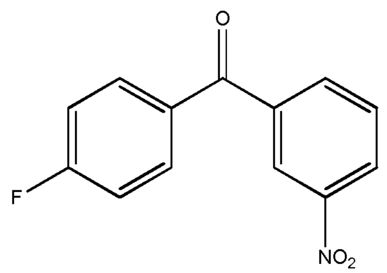

or

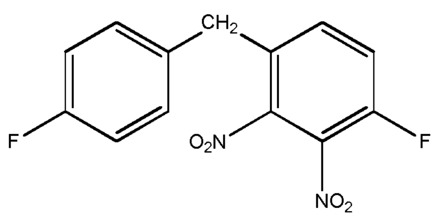

As discussed above with respect to Applicants' $TiCl_3$ back titration analytical methods, it is well known in the art that the reduction of organic nitro groups of organic nitro compounds to organic amines typically consume six electrons supplied by a reducing agent, such as for example $TiCl_3$. If one assumes that the bulk of the oxidizing species present in 4,4'-DFBP used to prepare PAEK or PEEK polymers via Applicants' methods above are nitro compounds, it is possible to calculate and express from the titration results the approximate concentration of organic nitro compounds present in the 4,4'-DFBP in terms of moles or weight of nitro group impurities present in a unit weight of 4,4'-DFBP analyzed by the $TiCl_3$ back titration analytical methods. Therefore it is possible to describe Applicants' processes for preparing PAEK

polymers in terms of the presence of nitro group impurities, so that in some embodiments, Applicants' inventions relate to a process for preparing a poly(aryl ether ketone) by

a) obtaining

i) 4,4'-difluorobenzophenone, and
ii) one or more nucleophiles, as specified in Claim 1

c) and reacting the 4,4'-difluorobenzophenone and the one or more nucleophiles, to form the poly(aryl ether ketone),

wherein the obtained 4,4'-difluorobenzophenone comprises one or more organic nitro compounds whose total concentration is between about 11 and about 600 milligrams of nitro groups per kilogram of obtained 4,4'-difluorobenzophenone, as measurable by $TiCl_3$ redox back titration analysis of nitro groups in the obtained 4,4'-difluorobenzophenone.

In such embodiments of Applicants' processes, the obtained 4,4'-difluorobenzophenone may contain alternative ranges of concentration of the nitro groups between about 11 and about 300 milligrams of nitro groups per kilogram of obtained 4,4'-difluorobenzophenone, or between about 11 and about 100 milligrams of nitro groups per kilogram of obtained 4,4'-difluorobenzophenone, or between about 100 and about 300 milligrams of nitro groups per kilogram of obtained 4,4'-difluorobenzophenone, as measurable by $TiCl_3$ redox back titration analysis of nitro groups in the obtained 4,4'-difluorobenzophenone.

Applicants have also shown that a relationship between the total concentration of oxidizing species in the obtained 4,4'-difluorobenzophenone used to prepare PAEK and PEEK polymers and the properties of those polymers can be independently measured in terms of the trace nitrogen content of the obtained 4,4'-difluorobenzophenone, as measured by a completely different analytical method, i.e. combustion / chemoluminescence analysis of the obtained 4,4'-difluorobenzophenone carried out according to ASTM D4629. See Figure 4.

Lastly, in some embodiments of Applicants' processes for preparing PAEK polymers, the at least one organic nitro compound having the structure

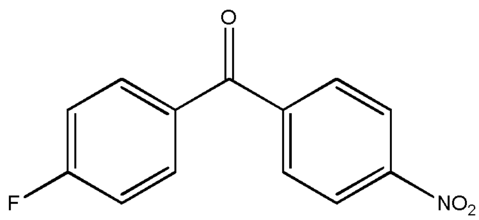

can be present at a concentration of between about 5 and about 1900 parts per million parts of 4,4'-difluorobenzophenone as measurable by gas chromatography.

Nevertheless, typically, the individual concentrations of the individual oxidizing species and/or nitro compounds in commercially available 4,4'-DFBP are low, normally significantly less than about 0.1 % (area percent or weight percent by gas chromatographic analysis) and therefore are undetected. Accordingly, despite the presence of several such oxidizing species and/or nitro compounds, and possible additional types of impurities such as positional isomers of the 4,4'-DFBP, the 4,4'-difluorobenzophenone obtained for use in Applicants' processes are typically measured to be relatively pure, for example at least about 95 %, or about 99 %, or about 99.5 %, or about 99.8 %, or about 99.9 % pure in total area percentage as measurable by gas chromatography.

In Applicants' processes for preparing PAEK polymers, the total concentration of oxidizing species in the obtained 4,4'-difluorobenzophenone (as measured by $TiCl_3$ back titration analysis) can be controlled or modulated (according to known processes, such as recrystallization, vacuum distillation, blending, and the like), so as to provide a pre-selected batch-to-batch concentration of oxidizing species per kilogram of provided 4,4'-difluorobenzophenone that is within a selected range, including any of the ranges of concentration of the oxidizing species described elsewhere herein. Preferably, the total concentration of oxidizing species in the obtained 4,4'-difluorobenzophenone as measured by $TiCl_3$ back titration analysis does not vary from batch-to-batch by more than about $\pm$ 25 %, or $\pm$ 20 %, or $\pm$ 15 %, or $\pm$ 10 %. Such modulation of the total concentration of oxidizing species in the obtained 4,4'-difluorobenzophenone can provide improved consistency and/or control of the molecular weight distributions, physical properties, and color of the PAEK and/or PEEK polymers produced.

The desired degree of modulation of the total concentration of oxidizing species in the obtained 4,4'-difluorobenzophenone (as measured by $TiCl_3$ back titration analysis) can be accomplished by many means or methods, known by the person skilled in the art. Such modulation can result from any action or process that controls, produces, or modulates the concentration of oxidizing species in the obtained 4,4'-difluorobenzophenone so as to be within the

selected concentration range, including modifications to the synthesis procedures or product purification procedures used to initially produce the 4,4'-difluorobenzophenone, solvent washing of the 4,4'-DFBP product, crystallization, vacuum distillation, sublimation, chromatography, or the like, or combinations thereof.

Additionally, the concentration of oxidizing species in the obtained 4,4'-difluorobenzophenone can be modulated by providing or blending two or more lots of 4,4'-difluorobenzophenone. Alternatively, the concentration of oxidizing species in the 4,4'-difluorobenzophenone can be modulated by spiking one or more nitro compounds or a composition comprising them into an initial quantity of 4,4'-difluorobenzophenone, to produce the obtained 4,4'-difluorobenzophenone.

Furthermore, Applicants' processes for preparing PAEK (and/or PEEK) polymers can comprise additional steps. For example, in some embodiments of Applicants' processes, the step (a) of obtaining 4,4'-difluorobenzophenone at least comprises a previous step of reacting 4,4'diaminodiphenylmethane with nitrous acid and/or a nitrite salt in the presence of hydrofluoric acid, to prepare 4,4'-difluorobenzophenone or precursors thereof that comprise oxidizing species, as is further additionally described below. To cite another example, additional steps to modify or modulate the concentrations of oxidizing species in the "obtained" 4,4'-difluorobenzophenone can be performed. In some embodiments, Applicants' processes can comprise a step, prior to step a), of treating a difluorobenzophenone $D_1$ to obtain a treated difluorobenzophenone $D_2$. For example, in some embodiments, the obtained 4,4'-difluorobenzophenone can itself be prepared by a process of treating a 4,4'-difluorobenzophenone comprising oxidizing species in a total concentration corresponding to more than 80 μmol of $TiCl_3$ oxidized by the oxidizing species during the $TiCl_3$ back titration analysis per gram of the 4,4'-difluorobenzophenone, to obtain 4,4'-difluorobenzophenone that is within a desired range of total concentration of the one or more oxidizing species.

In Applicants' processes for preparing PAEK (and/or PEEK) polymers, the one or more nucleophiles reacted with the provided 4,4'-difluorobenzophenone typically predominantly comprise aryl compounds comprising at least two hydroxyl groups bonded to an aryl ring (though small concentations of mono-hydroxy compounds may optionally be present. The one or more nucleophiles can be selected from p-hydroquinone, 4,4'-dihydroxybenzophenone, 4,4'-biphenol, 1,4-bis-(p-hydroxybenzoyl)benzene, 1,3-bis-(p-hydroxybenzoyl)benzene, and mixtures thereof. More preferably, the one or more nucleophiles primarily consist of, or consist essentially of p-hydroquinone.

Applicants' processes for preparing PAEK (and/or PEEK) polymers are typically conducted in an inert solvent, or a mixture of inert solvents. Such solvents are typically chemically and thermally stable under the conditions of polycondensation reactions, and can be selected from, to cite non-limiting examples, toluene, sulfolane, diphenylsulfone, benzophenone and dibenzothiophene dioxide, or mixtures thereof. In some embodiments, the inert solvent comprises mixtures of diphenyl sulfone with sulfolane and/or toluene. In many embodiments, the inert solvent consists essentially of diphenylsulfone.

Applicants' processes for preparing PAEK (and/or PEEK) polymers are typically conducted in the presence of a base, often a solid base, for deprotonating the hydroxyl groups of the nucleophilic monomers. Such bases can include one or more basic salts of sodium or potassium, or a mixture thereof, including a mixture of sodium carbonate and potassium carbonate.

**Polymers That Can Be Produced By Applicants' Processes**

In some preferred embodiments, Applicants' processes for preparing PAEK and/or PEEK polymers, the poly(aryl ether ketone) predominantly comprises repeat units having the structure

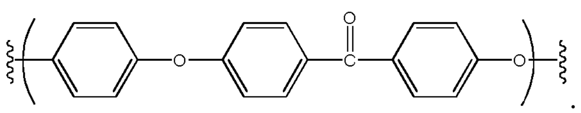

Applicants have discovered that the total concentration of the oxidizing species, nitro compounds, and/or total nitrogen in some commercially provided 4,4'-difluorobenzophenone used to make PAEK and/or PEEK polymers can have a dramatic impact on the physical properties of the product polymers, because of their substantial effects on polymer molecular weight and branching.

It should be understood that the measured color of the product PEEK polymer depends not only on the formation of color bodies as a result of the presence of oxidizing species, but also on changes in the morphological properties and molecular weight distributions of the polymer, which effect crystallinity of the polymers. Accordingly, the color of solid PEEK is dependent on its molecular weight : low molecular weight samples exhibit a higher degree of crystallinity, and as a result have a lighter color than high molecular weight lots. Therefore, in order to allow for a reasonable comparison of samples of different molecular weights, the color of each PEEK sample can be compared to the expected color of commercially available low color Ketapire® PEEK of the same melt viscosity at 400°C, 1000 $s^{-1}$.

The polymer color is typically measured and quoted using the L*a*b* tristimulus coordinates defined by the

CIE (Commission Internationale de l'Eclairage) in 1976 (K. Nassau, in "Kirk-Othmer Encyclopedia of Chemical Technology", 2004, Chapter 7, 303-341). These three basic coordinates represent the lightness of the color (L*, L* = 0 yields black and L* = 100 indicates white), and its position between red/magenta and green (a*, negative values indicate green while positive values indicate magenta) and its position between yellow and blue (b*, negative values indicate blue and positive values indicate yellow). For PEEK samples, the L* value is the most sensitive to changes in the process. Each PEEK sample was thus characterized by its Delta L* = L* of the sample - L* expected value for Ketaspire® PEEK of same melt viscosity. Using this criterion, Delta L* ≥ 0 represents a desirable improvement in the polymer color.

**Figure 1,** shows a plot of the Delta L* (color of compression molded plaques of PEEK prepared by Applicants' processes) versus the concentration of oxidizing species in the 4,4'-DFBP monomer, as measured by $TiCl_3$ back titration analysis. By use of Applicants' discoveries and processes, the total concentration of the oxidizing species and/or nitro compounds in the provided 4,4'-difluorobenzophenone can be controlled within selected concentration ranges so as to modulate the color of the poly(aryl ether ketone) (a PEEK polymer) formed, for example so that Delta L* of the poly(aryl ether ketone) is greater than zero, or greater than or equal to about one, or greater than or equal to about two, wherein Delta L* is defined as $L^*_{measured}$ - $L^*_{min}$, and L* is measured according to ASTM E308 using D65 as illuminant on a compression molded plaque of the poly(aryl ether ketone), and $L^*_{min}$ is defined as the function 104 - 12.27 log $M_{V1000}$, wherein $MV_{1000}$ is the measured melt viscosity of the poly(aryl ether ketone) in Poise measured at 400°C by capillary viscometry at 1000 $sec^{-1}$.

The total concentration of the trace oxidizing species and/or organic nitro compounds in the provided 4,4'-difluorobenzophenone (whether measured by $TiCl_3$ back titration analysis and in terms or $TiCl_3$ oxidized, or in terms of concentration of nitro groups, or in terms of nitrogen content as measured by combustion/chemiluminescence) can also significantly effect the physical properties of the PAEK and/or PEEK polymers. See **Figure 2,** which illustrates the effect of the concentration of oxidizing species in the 4,4'-DFBP monomer (as measured by $TiCl_3$ back titration analysis) on the shear thinning properties of PEEK produced by Applicants processes.

Pseudoplastic properties relate to the shear thinning properties of the polymers in the melt, i.e. their ability to exhibit melt viscosity decreases when subjected to shear stresses, which is relevant to many molding processes. See also **Figure 3,** which illustrates the effect of the total concentration of 4-fluoro-4'-nitrobenzophenone (Nitro Impurity 1) in 4,4'-DFBP (as measured by GC analysis) on the melt viscosity ratio of PEEK produced by Applicants processes. See also **Figure 4,** which illustrates the effect of the total concentration of nitrogen in 4,4'-DFBP (mg/kg, as measured by combustion/chemiluminescence according to ASTM D4629) on the melt viscosity ratio of PEEK produced by Applicants processes.

In view of **Figures 2, 3,** and **4,** Applicants have discovered that the shear thinning properties of the preferred PEEK polymers produced by the processes disclosed herein can be predicted and/or modulated in accordance with empirical linear equations relating the differences in melt viscosities at two differing shear rates with the analyzed concentration of oxidizing species, nitro compounds, nitro groups, or total nitrogen in the provided 4,4'-DFBP.

In Applicants' preferred processes for making PAEK or PEEK polymers, the total concentration of the oxidizing species and/or organic nitro compounds in the provided 4,4'-difluorobenzophenone can be modulated or controlled within a selected concentration range so as to modulate the shear thinning properties of the product poly(aryl ether ketone). In particular, based on experimental data for particular PEEK polymers produced by Applicants processes, the shear thinning properties of the PEEK polymers prepared by the Applicants' processes were characterized according to the linear equations :

$$\mathrm{Log}_{10}\, MV_{100} - 2\log_{10} MV_{10000} = 0.0061\,[ox] - 2.27\ ;$$

or

$$\mathrm{Log}_{10}\, MV_{100} - 2\log_{10} MV_{10000} = 0.0006\,[NO_2] - 2.27\ ;$$

or

$$\mathrm{Log}_{10}\, MV_{100} - 2\log_{10} MV_{10000} = 0.0033\,[N] - 2.2935\ ;$$

wherein $MV_{100}$ and $MV_{10000}$ are predicted melt viscosities expressed in Poise and measurable by capillary viscometry at 400°C, and 100 $sec^{-1}$ and 10,000 $sec^{-1}$ respectively, and expressed in Poise ; and wherein the concentration of the oxidizing species concentration [ox] is expressed as µmol of $TiCl_3$ oxidized during the $TiCl_3$ redox back titration per gram

of provided 4,4'-difluorobenzophenone, and wherein [N] is expressed as mg of nitrogen per gram of obtained 4,4'-difluorobenzophenone, as measurable by combustion / chemoluminescence analysis of the obtained 4,4'-difluorobenzophenone, and wherein the concentration of nitro groups [$NO_2$] (related to the presence of oxidizing organic nitro compounds, by assuming six moles of $TiCl_3$ is required to reduce one nitro group) is expressed as mg of $NO_2$ groups per kg of provided 4,4'-difluorobenzophenone, as calculated from $TiCl_3$ redox back titration analysis results, as calculated according to the following equation ;

**Error! Objects cannot be created from editing field codes.,**

In a similar way as shown **Figure 3,** based on experimental data for particular PEEK polymers produced by Applicants processes, the melt viscosity ratio of the PEEK polymers prepared by the Applicants' processes can be predicted and/or modulated in accordance with a linear equation

$$[\mathrm{Log}_{10}\ \mathrm{MV}_{100} - 2\ \log_{10}\ \mathrm{MV}_{10000} = 0.0006\ [\mathrm{FNBP}] - 2.327]\ ;$$

wherein $MV_{100}$ and $MV_{10000}$ are predicted melt viscosities expressed in Poise and measurable capillary viscometry at 400°C, and 100 $sec^{-1}$ and 10,000 $sec^{-1}$ respectively, and expressed in Poise ; and [FNBP] is the concentration of 4-fluoro-4'-nitrobenzophenone, in area ppm of 4-fluoro-4'-nitrobenzophenone of provided 4,4'-difluorobenzophenone, as measured by gas chromatography.

Applicants' processes for producing PAEK or PEEK polymers can be used to prepare PAEK or PEEK polymers, including PAEK or PEEK polymers having a high degree of polymer chain branching, which can be useful in certain molding applications. High degrees of branching can be difficult to accurately measure by direct measurement of melt viscosity as a function of shear stress, but can also be experimentally characterized by gel permeation chromatography. Gel permeation chromatography can be used to measure Mz (the z- average molecular weight), as well as Mw (the weight average molecular weight). The ratio of Mz/Mw can be used as a measure of the level of branching of PAEK and PEEK polymers.

**Figure 5** shows a graph of PEEK polymer Mz/Mw ratio as a function of the concentration of oxidizing species in the 4,4'-DFBP monomer used to prepare the PEEK polymer (as measured by $TiCl_3$ back titration analysis of the 4,4'-DFBP monomer). As shown in **Figure 5,** high levels of oxidizing species in the 4,4'-DFBP monomer can be used to produce PEEK polymers with comparatively large ratios of Mz/Mw.

Accordingly, Applicants' processes can be used to produce pseudoplastic PAEK or PEEK polymers, i.e. wherein Mz/Mw is between about 2.00 and about 6.00, or alternatively between about 2.75 and 5.00,wherein Mz is the 2$^{nd}$ order average molar mass, Mw is the weight average molar mass. Mz and Mw can be measured by high temperature gel permeation chromatography at 80°C in a mixture of o-dichlorobenzene and p-chlorophenol (7/3 vol/vol) on a gel permeation column having a size exclusion limit of 20,000,000.

Alternatively, if the level of branching of the PAEK or PEEK polymers are measured by capillary rheology, Applicants' processes can be used to produce branched PAEK or PEEK polymers wherein [$\mathrm{Log}_{10}\ MV_{100}$ - 2 $\log_{10}\ MV_{10000}$] ≥ -2.05, or alternatively between -2.40 and -2.05 ; wherein $MV_{100}$ and $MV_{10000}$ are experimentally measured melt viscosities of the poly(aryl ether) ketone, expressed in Poise and measured by capillary rheology at 400°C, and 100 $sec^{-1}$ and 10,000 $sec^{-1}$ respectively.

Such branched PAEK and/or PEEK polymers are believed to be novel regardless of the process used to produce them. Accordingly, in some aspects, Applicants' invention relate to poly(aryl ether) ketones comprising at least some repeat units having the structure

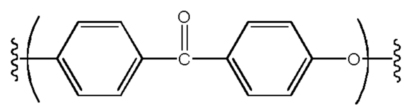

wherein Mz/Mw is between about 2.00 and about 6.00, and wherein Mz is the z-average molecular weight, Mw is the weight average molecular weight, and Mz and Mw are measured by high temperature gel permeation chromatography at 80°C in a mixture of o-dichlorobenzene and p-chlorophenol (7/3 vol/vol) on a gel permeation column having a size exclusion limit of 20,000,000.

Preferably, such poly(aryl ether) ketones predominantly comprise repeat units having the structure

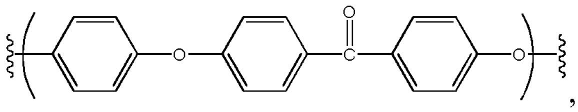

,

i.e, the poly(aryl ether) ketones are also poly(ether ether) ketones. In such poly(aryl ether) ketones, the poly(aryl ether ketone) comprises ≥ 90 %, or ≥ 95 %, or ≥ 98 %, or ≥ 99 %, or ≥ 99.5, or ≥ 99.8, or ≥ 99.9 %, of repeat units having the structure

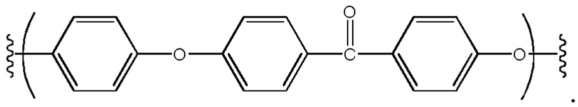

.

Preferably, such poly(aryl ether) ketones can have at least some branching in the polymer chains as a result of the presence of organic nitro compounds during the formation of the poly(aryl ether) ketones, and in some such embodiments, the branching in the polymer chains does not result from the purposeful addition of externally multifunctional monomer during the process of making of the poly(aryl ether) ketones.

Preferably, in such poly(aryl ether) ketones, Mz/Mw is between 2.75 and 5.00, wherein Mz is the average molar mass, Mw is the weight average molar mass, and Mz and Mw are measured by high temperature gel permeation chromatography at 80°C in a mixture of o-dichlorobenzene and p-chlorophenol (7/3 vol/vol) on a gel permeation column having a size exclusion limit of 20,000,000, or for such poly(aryl ether) ketones, [$Log_{10}$ $MV_{100}$ - 2 $log_{10}$ $MV_{10000}$ ≥ -2.05, or ≥ -2.20 ; wherein $MV_{100}$ and $MV_{10000}$ are experimentally measured melt viscosities of the poly(aryl ether) ketone, expressed in Poise and measured by capillary rheology at 400°C, and 100 $sec^{-1}$ and 10,000 $sec^{-1}$ respectively.

The degree of crystallinity of PAEK or PEEK polymers can be determined by different methods ("Crystallinity Determination", J. Runt, M. Kanchanasopa, "Encyclopaedia Of Polymer Science and Technology", Online Ed, 2004), Wide Angle X-Ray diffraction (WAXD) or Differential Scanning Calorimetry (DSC) are two common methods used to determine crystallinity. By DSC, the reference (Blundell et al., Polymer, 1983, V 24, P 953) is that a fully crystalline PEEK exhibits an enthalpy of fusion of 130 J/g. Semi-crystalline PAEK have crystallinity levels of above 5 %, preferably above 10 % as measured by WAXD or by DSC.

Generally chromatographic data is presented as a graph of detector response (y-axis) against retention time (x-axis). This provides a spectrum of peaks for a sample representing the analytes present in a sample eluting from the column at different times. Retention time can be used to identify analytes if the method conditions are constant. Also, the pattern of peaks will be constant for a sample under constant conditions and can identify complex mixtures of analytes. Most common detectors are flame ionization detectors (FID) and thermal conductivity detectors (TCD). In most modern applications however the GC or LC apparatus is connected to a mass spectrometer or similar detector that is capable of identifying the analytes represented by the peaks. The area under a peak is proportional to the amount of analyte present. By calculating the area of the peak using the mathematical function of integration, the concentration of an analyte in the original sample can be determined. In most modern systems, computer software is used to draw and integrate peaks.

Still another aspect of the present invention is related to PAEK polymer obtainable by or prepared according to the process as above described.

Should the disclosure of any patents, patent applications, and publications which are incorporated herein by reference conflict with the description of the present application to the extent that it may render a term unclear, the present description shall take precedence.

**Analytical methods**

*Melt Viscosities*

Melt viscosity measurements were made with a capillary rheomoter according to ASTM D3835. Readings were taken at 400°C, at a shear rate of 100 $s^{-1}$, 1,000 $s^{-1}$, and 10,000 $s^{-1}$, using a tungsten carbide die, 0.5 x 3.175 mm.

*Gel Permeation Chromatography*

Gel Permeation Chromatography (GPC) measurements were carried out on Polymer Laboratories PL-220, using a Shodex HT-806M column. The detector was a differential refractive index detector. The solvent was a mixture of o-dichlorobenzene and p-chlorophenol (7/3 vol/vol) and the temperature was 80°C. The injection volume was 0.20

mL. Narrow molecular weight standards of PS were used as standard. The sample to analyze (0.1 g) was dissolved in p-chlorophenol (10 mL) at 150°C. When dissolved, 3 mL of the solution were diluted with 7 mL of o-dichlorobenzene and injected.
Mathematical treatment of the thus obtained chromatogram to determine the different molecular weight averages values is described in J. Janca in J.C. Giddings, E. Grushka, J. Cazes and P.R. Brown, eds, "Advances in Chromatography", Vol. 19, Marcel Dekker, Inc., New York, 1981, P.37.

***Polymer Color Measurements***

The color of molded polymer plaques (2.5 mm thick obtained by compression molding of polymer powder at 370°C/99 bar/15 minutes then 370°C/132 bar,/5 minutes. To ensure full crystallization, the plaques were slowly cooled down to room temperature over 40 minutes) and then measured under D65 light source at 10° angle.
Color measurements are expressed with L*, a*, b* tristimulus coordinates defined by the CIE (Commission Internationale de l'Eclairage) in 1976 (K. Nassau, in "Kirk-Othmer Encyclopedia of Chemical Technology", 2004, Chapter 7, P 303-341). All measurements of the plaques were made on a Gretag Macbeth Color Eye Ci5 Spectrophotometer. Plaques were measured directly on the spectrometer eye and only one reading was taken.

**Determination of the content in 4-fluoro-4'-nitrobenzophenone and of the Purity of 4,4'-Difluorobenzophenone by Gas Chromatography**

Gas chromatographic analysis was performed on an Agilent HP6890 Gas Chromatograph, using an HP column : HP-5, 15m x 0.25mm diameter, 0.25 micron film thickness and the running conditions were : Injector temperature : 290°C

Detector temperature (FID) : 300°C

Oven ramp : 60°C, hold for 1 minute, then to 325°C at 30 C/minute, 5 minute hold at 325°C.
Split ratio : 60:1
Injection volume : 0.2 μl
Carrier gas flow (helium) : 1ml/minute

The sample is prepared by dissolving 150 mg of 4,4'-difluorobenzophenone in 5 ml of acetone.
The GC retention time for 4,4'-difluorobenzophenone is around 7.5 minutes.
The 4,4'-DFBP purity is quoted as an area %, calculated from the GC peak areas in the area % table. The 4-fluoro-4'-nitrobenzophenone impurity peak was detected at approximately 9.2 minutes and was identified by GCMS analysis. The content in 4-fluoro-4'-nitrobenzophenone is calculated as the ratio of its peak area with the total peak area.

***Determination of the nitrogen content of 4,4'-Difluorobenzophenone by chemoluminescence***

The sample of 4,4'-DFBP to analyze was dissolved in toluene and analyzed according to ASTM D4629 (Antek equipment).

**Determination of Oxidizing Species in 4,4'-DFBP by $TiCl_3$ Back Titration Analysis**

As described above, the Applicants have developed a new "$TiCl_3$ back titration analysis" method for the analysis of oxidizing species, including trace organic compounds comprising nitro groups in 4,4'-DFBP samples.

*Optimized Analytical Procedure for Determination of Total Oxidizing Impurities and Nitro Groups in 4, 4'-Difluorobenzophenone*

1. **BACKGROUND**

Described below is an optimized version of Applicants' $TiCl_3$ back titration analysis for measuring the concentration of traces of oxidizing species and/or organic nitro compound impurities in bulk 4,4'DFBP. It is believed that this method has a detection limit of about 1.5 μmol of $TiCl_3$ oxidized by the oxidizing species per gram of provided 4,4'-difluorobenzophenone. Assuming that one mole of TiCl3 provides one mole of electrons for the reduction of oxidizing species, and that complete reduction of organic nitro groups to the corresponding amines requires six electrodes,

reductions of 3,3'-dinitrobenzophenone as a model organic nitro compound indicated that the method detailed below has a lower detection limit of about 11 mg of nitro (NO2) groups per kg of 4, 4-DFBP.

Applicable sample size of the 4, 4'-DFBP is about 0.5-3 g of 4, 4'-DFBP.

2. **EQUIPMENT**

2.1. Modern Potentiometric Titrators such as for example the Brinkmann/Metrohm 726 Titroprocessor with two 685 Dosimat burets, or a Brinkmann/Metrohm 809 Titrando are suitable.
2.2. Two burets or buret exchange units for the titrators, 5 mL capacity
2.3. Extended tubing for buret tip for one buret to reach titration cell on second buret, 100 cm, 6.1805.120, or equivalent.
2.4. Magnetic stirrer unit and PTFE-Coated stir bars for titrator.
2.5. Analytical balance, measuring capability of 0.0001 g.

3. **CHEMICALS**

3.1. Nitrogen gas, oxygen impurities less than 20 ppm
3.2. Ammonium iron(III) sulfate dodecahydrate, 99 %, ACS Reagent Grade
3.3. Titanium(III) chloride solution, 10 Wt Percent in 20-30 wt % hydrochloric acid
3.4. Hydrochloric acid, concentrated, 37 %, trace-metal grade
3.5. Methanol, Fisher Optima grade, or equivalent
3.6. Deionized water, 18 megohm-cm conductivity

4. **PROCEDURE**

4.1. Preparation of working solutions
4.1.1. Oxygen-free water
Sparge water in 1-L volumetric flasks for 1 h with nitrogen to remove dissolved oxygen. Store in a stoppered container.
4.1.2. Titanium (iii) chloride solution, 0.03N
Add 800 ml of oxygen free water to a volumetric flask and bubble with nitrogen. Add 30 ml of commercial 10 % titanium (iii) chloride solution using a transfer pipet. Add 100 ml of concentrated hydrochloric acid to the flask and dilute to the mark with oxygen-free water. Place the titanium chloride solution in a titrator reservoir and blanket with nitrogen. The absolute concentration of $TiCl_3$ in the solution can be experimentally confirmed by direct titration of a portion of the $TiCl_3$ solution via the back titration procedure described below with Ferric ammonium sulfate, as described below
4.1.3. Sodium acetate/acetic acid buffer solution, pH=5.4
Add 40 g of reagent grade sodium acetate trihydrate to a tared 250 mL beaker on a top loading balance. Add water to bring the total weight to 100g. Place the beaker on a magnetic stirrer in a hood and add a stir bar. Insert a calibrated pH electrode into the solution and add, dropwise, acetic acid until the pH indicates 5.4.
4.1.4. Ferric ammonium sulfate titrant, 0.025N
Add approximately 250 mL of deionized water to a 500 mL volumetric flask. Add 8 mL of concentrated sulfuric acid to the flask and shake to mix. Add 6.025 g of ACS reagent grade ferric ammonium sulfate dodecahydrate to the flask contents. Add deionized water to the flask mark and shake well to mix. 4.2. Analysis Procedure
4.2.1. Weigh approximately 1 g of monomer sample into a tared titration vessel on an analytical balance. Record the weight to the nearest 0.0001 g.
4.2.2. Add a magnetic stirring bar and 100 mL of high-purity methanol to the titration vessel.
4.2.3. Attach to a titration stand equipped with a vessel cover which will eliminate air contact and which contains a nitrogen bubbler tube for sparging the sample solution.
4.2.4. Remove a port from the top and add 3.0 mL of sodium acetate/acetic acid buffer solution. Stopper the port and bubble the cell contents with nitrogen for 20 minutes at a flow rate of approximately 20 mL/min to remove oxygen.
4.2.5. Add an excess of 0.03 N titanium(III) chloride to the titration cell using the titrator buret. A volume of 3.000 mL is normally enough and will cause the cell contents to become a yellow/green color. Allow this excess of titrant

to react for 10.0 minutes. If the solution does not exhibit the yellow/green color, repeat the titration using a smaller sample size or larger amount of titanium(III) titrant.
4.2.6. After the 10 minute reaction time, quickly remove the cell port and add 3 mL of concentrated hydrochloric acid. Replace the titration cell cover port plug. Nitrogen purge should be high enough to exclude entry of air while the acid is being added.
4.2.7. Titrate the cell contents with 0.025N ferric ammonium sulfate titrant using a second buret.
4.2.8. If the electrode potential at the start of this titration is less than 500 mV, too much nitro functionality is present. Repeat the determination using a smaller sample size or a greater volume of titanous chloride solution. The volumes of titanous chloride used for sample analysis and blank must be identical.
4.2.9. To determine the procedure blank, repeat the above procedure omitting the 4,4'-DFBP sample. Nitrogen flow rate must be the same for sample and blank measurements. The volumes of titanous chloride used for sample analysis and blank must be identical.

To experimentally test the accuracy and reliability of the procedure, several test runs were conducted using 4,4'-DFBP sample produced by a process that does not involve amines, nitrite salts, nitro compounds or nitric acid, and 3,3'-dinitrobenzophenone (DNBP) as a model nitro compound. The results of those test are shown in Table II below :

**Table II. Spike Recovery Values for Method, Final Version**

| Run | Weight DNBP spike, g | Weight DFBP Added, g | % Nitro by Titration | % Nitro theoretical | % Recovery |
|---|---|---|---|---|---|
| 1 | 0.00000 | 0.66 | 0.00 | N/A | N/A |
| 2 | 0.00053 | 0.00 | 33.9 | 33.80 | 100.0 |
| 3 | 0.00053 | 0.66 | 37.9 | 33.80 | 112.1 |
| 4 | 0.00053 | 1.48 | 41.3 | 33.80 | 122.2 |

A sample titration curve for analysis of the DFBP, with a derivative curve is shown for the sample titration of DFBP on attached **Figure 5**a on the left, and a titration blank is shown on **Figure 5b** the right.

*Examples*

The invention will now be illustrated by the following non-limiting examples. In these examples, the amounts are indicated as percentages by weight unless otherwise indicated.

*Materials*

Diphenyl sulfone, polymer grade, was purchased from Proviron of Belgium.
Hydroquinone, photographic grade, was purchased from Eastman Chemical Company of Kingsport Tennessee, USA.
Sodium carbonate, i.e. light soda ash, was purchased from Solvay of Dombasle, France.
Potassium carbonate, EF-90, was purchased from Armand Products of Princeton New Jersey.
4,4'-difluorobenzophenone was purchased from several different commercial suppliers, including Jintan of the Peoples Republic of China (Supplier A of Tables 1 & 2), Allied Signal/Riedel-de-Haen of Germany (Supplier B), Sigma Aldrich of Milwaukee Wisconsin (Supplier C) and Acros Organics of Belgium (Supplier D).
3,3'-dinitrobenzophenone, 96 %, was purchased from Aldrich and used as received.
Spiking experiments were conducted by adding the 3,3'-dinitrobenzophenone (Aldrich, 96 %) at the indicated concentration relative to 4,4'-DFBP. The concentration in 3,3'-dinitrobenzophenone was calculated assuming that 1 g of 3,3'-dinitrobenzophenone contributes for 338 mg of nitro groups.

Example 1 - *PEEK Polymerization Experiments with 4,4'-DFBP Comprising Tracers of Organic Nitro Compounds Prepared By Procedure "A"*

Applicants collected 4,4'-DFBP samples from four commercial sources (A= Jintan, B = Reidel-de-Haen, C = Aldrich, and D= Acros) having varying level of trace impurities, and analyzed them for the presence of oxidizing species by $TiCl_3$ back titration analysis described herein, GC and/or GC Mass Spectroscopic analysis, and other analytical techniques described herein. The Jintan 4,4'-DFBP sample, which is believed to have not been prepared by a Schiemann process, from nitro compounds or using nitrite salts or nitric acid oxidizer, gave an analysis for $NO_2$ groups below

Applicants' estimated lower detection limits for such $NO_2$ groups. Applicants then prepared six additional samples of 4,4'-DFBP by "spiking" Jintan 4,4'-DFBP with commercially available 3,3'-dinitrobenzophenone, and analyzed the six 4,4'-DFBP samples comprising spiked 3,3'-dinitrobenzophenone by $TiCl_3$ back titration analysis. The samples for analysis were prepared by mixing the 4,4'-DFBP and the 3,3'-dinitrobenzophenone as solutions in methanol. From the measured moles of $TiCl_3$ oxidized per gram of 4,4'-DFBP oxidized for each sample, Applicants calculated an estimated number of mg of $NO_2$ groups per kg of 4,4'-DFBP, assuming that six moles of $TiCl_3$ were required to completely reduce one mole of $NO_2$ group, to arrive at the for the concentration of nitro impurity compounds shown in Tables 1 and 2 attached below.

Applicants then used the 4,4'-DFBP samples to prepare PEEK polymer samples 1-11 (see Tables 1 & 2) by the procedure outlined immediately below, and another three PEEK samples (11-13) by the slightly differing polymerization procedure from the prior art, see Example 2 below.

To prepare PEEK samples 1-11 described in Tables 1 & 2, a 500 mL 4-neck reaction flask was fitted with a stirrer, a $N_2$ inlet tube, a Claisen adapter with a thermocouple plunging in the reaction medium, and a Dean-Stark trap with a condenser and a dry ice trap. 127.82 g of diphenyl sulfone of polymer grade, 28.60 g of photographic grade hydroquinone and 57.23 g of one of eleven samples of 4,4'-difluorobenzophenone comprising varying concentrations of organic nitro compound impurities were added to the flask. The flask contents were evacuated under vacuum and then filled with high purity nitrogen (containing less than 10 ppm $O_2$). The reaction mixture was then placed under a constant nitrogen purge (60 mL/min).

The reaction flask and mixture was heated slowly to 150°C. At 150°C, a mixture of 28.43 g of $Na_2CO_3$ and 0.1800 g of $K_2CO_3$ was added via a powder dispenser to the reaction mixture over 30 minutes. At the end of the addition, the reaction mixture was heated to 320°C at about 1°C/minute. After 50 minutes at 320°C, the polycondensation reaction was terminated by addition of 6.8203 g of 4,4'-difluorobenzophenone to the reaction mixture while keeping a nitrogen purge on the reactor. After 5 more minutes, 0.4420 g of lithium chloride were added to the reaction mixture. 10 minutes later, another 2.2734 g of 4,4'-difluorobenzophenone was added to the reactor and the reaction mixture was kept at temperature for 15 minutes.

The reactor content was then poured from the reactor into a stainless steel pan and cooled. The solid was broken up and ground in an attrition mill through a 2 mm screen. Diphenyl sulfone and salts were extracted from the ground solid by washing with acetone and then water at pH between 1 and 12, the pH of the last water ash being between 5 and 7. The remaining powder was then removed from the reactor and dried at 120°C under vacuum for 12 hours yielding 67-70 g of a white powder.

**Example 2 -** *PEEK Polymerization Experiments with 4,4'-DFBP Comprising Tracers of Organic Nitro Compounds Prepared By Procedure "B" (described in WO2007/144610)*

Applicants used three additional 4,4'-DFBP samples (comprising $NO_2$ groups from organic nitro compound impurities) to prepare PEEK polymer samples 12-14 (see Tables 1 & 2) by the procedure outlined below (as generically described in WO 2007/144610.

To prepare the PEEK samples 12-14 described in Tables 1 & 2, a 500 mL 4-neck reaction flask was fitted with a stirrer, a $N_2$ inlet tube, a Claisen adapter with a thermocouple plunging in the reaction medium, a Dean-Stark trap with a condenser and a dry ice trap. 127.82 g of polymer grade diphenyl sulfone, 28.5983 g of photographic grade hydroquinone, and 58.5409 g of 4,4'-difluorobenzophenone comprising NO2 impurities as indicated in Tables 1 & 2 were added to the reaction flask. The flask contents were purged with high purity nitrogen (containing less than 10 ppm $O_2$) for one hour. The reaction mixture was then placed under a constant nitrogen purge (60 mL/min). The reaction mixture was then heated slowly to 150°C. At 150°C, a mixture of 27.598 g of $Na_2CO_3$ and 0.720 g of $K_2CO_3$ was added via a powder dispenser to the reaction mixture over 20 minutes. At the end of the addition, the reaction mixture was heated to 200°C and held at that temperature for one hour. The reaction mixture was then heated to 250°C and held at that temperature for one hour. The reaction mixture was then heated to 315°C and held at that temperature for two hours. The reactor contents were then poured from the reactor into a stainless steel pan and cooled. The solid was broken up and ground in an attrition mill through a 2 mm screen. Diphenyl sulfone and salts were extracted from the mixture with acetone and then water at pH between 1 and 12, the pH of the last water ash being between 5 and 7. The powder was then removed from the reactor and dried at 120°C under vacuum for 12 hours yielding 67-70 g of a white powder, i.e. samples 12-14 of Tables 1 & 2.

*Characterization and Properties of PEEK Samples 1-14*

Melt viscosity measurements were made with a capillary rheometer according to ASTM D3835. Readings were taken at 400°C, at a shear rate of 100 $s^{-1}$, 1,000 and 10,000 $s^{-1}$, using a tungsten carbide die, 0.5 x 3.175 mm.

Gel Permeation Chromatography (GPC) measurements were carried out on Polymer Laboratories PL-220, using a Shodex HT-806M column. The detector was a differential refractive index detector. The solvent was a mixture

of o-dichlorobenzene and p-chlorophenol (7/3 vol/vol) and the temperature was 80°C. The injection volume was 0.20 mL. Narrow molecular weight standards of PS were used as standard. The sample to analyze (0.1 g) was dissolved in p-chlorophenol (10 mL) at 150°C. When dissolved, 3 mL of the solution were diluted with 7 mL of o-dichlorobenzene and injected.

Molded plaques (2.5 mm thick) were produced from the dried polymer samples 1-14 by compression molding using a 5 cm diameter piston mold (304SS material of construction) at 370°C/99 bar/15 minutes then 370°C/132 bar,/5 minutes. To ensure full crystallization, the plaque was slowly cooled down to room temperature over 40 minutes. The color of the plaques was measured under D65 light source at a 10° angle.

Color measurements are expressed with L*, a*, b* tristimulus coordinates defined by the CIE (Commission Internationale de l'Eclairage) in 1976 (K. Nassau, in "Kirk-Othmer Encyclopedia of Chemical Technology", 2004, Chapter 7, P 303-341). All measurements were made on Gretag Macbeth Color Eye Ci5 Spectrophotometer. Plaques were measured directly on the spectrometer eye and only one reading was taken.

The Results of the measurements of the properties of the various polymers are summarized in attached Tables 1 and 2 below.

As used herein, the phrases "selected from the group consisting of," "chosen from," and the like include mixtures of the specified materials. Terms such as "contain(s)" and the like as used herein are open terms meaning 'including at least' unless otherwise specifically noted. Phrases such as "mention may be made," etc. preface examples of materials that can be used and do not limit the invention to the specific materials, etc., listed.

All references, patents, applications, tests, standards, documents, publications, brochures, texts, articles, etc. mentioned herein are incorporated herein by reference. Where a numerical limit or range is stated, the endpoints are also included. Also, all values and subranges within a numerical limit or range are specifically included as if explicitly written out.

The above description is presented to enable a person skilled in the art to make and use the invention, and is provided in the context of a particular application and its requirements. Various modifications to the preferred embodiments will be readily apparent to those skilled in the art, and the generic principles defined herein may be applied to other embodiments and applications without departing from the spirit and scope of the invention. Thus, this invention is not intended to be limited to the embodiments shown, but is to be accorded the widest scope consistent with the principles and features disclosed herein. In this regard, certain embodiments within the invention may not show every benefit of the invention, considered broadly.

**Table 1**

| Expt # | 4-4'-DFBP Source ** | [oxidizing species] (μmol Ti3+/g DFBP) | $[NO_2]$ Mg/kg ($TiCl_3$ Titration) | [N] Mg/kg (Chemoluminescence ASTM D4629) | [4,4'-FNBP] Area ppm (by GC) | 4-4'-DFBP, GC Area % | MV (Poise) at 100 $sec^{-1}$ | MV (Poise) at 1000 $sec^{-1}$ | MV (Poise) at 10000 $sec^{-1}$ | Log $MV_{100}$ - 2 Log $MV_{1000}$ | Mz/Mw (by GPC) |
|---|---|---|---|---|---|---|---|---|---|---|---|
| 1 | A | 1.5 | 11 | 0 | 0 | 99.92 | 12975 | 5247 | 1538 | -2.26 | 1.49 |
| 2 | B | 12 | 94 | 31 | 265 | 99.92 | 13403 | 4759 | 1415 | -2.17 | 1.56 |
| 3 | C | 17 | 131 | 43 | 378 | 99.62 | 23251 | 6792 | 1927 | -2.2 | 1.58 |
| 4 | D | 24 | 184 | 71 | 585 | 99.39 | 14578 | 4729 | 1323 | -2.08 | 1.63 |
| | | | | | | | | | | | |
| 5 | A + 3,3'DNBP | 10 | 80 | 22 | 0 | 99.82 | 17371 | 5872 | 1750 | -2.25 | 1.56 |
| 6 | A + 3,3'DNBP | 26 | 199 | 54 | 0 | 99.80 | 17102 | 5371 | 1488 | -2.11 | 1.61 |
| 7 | A + 3,3'DNBP | 40 | 307 | 83 | 0 | 99.84 | 11352 | 3795 | 1033 | -1.973 | 1.69 |
| 8 | A + 3,3'DNBP | 50 | 383 | 104 | 0 | 99.82 | 16962 | 4992 | 1231 | -1.951 | 1.78 |
| 9 | A + 3,3'DNBP | 154 | 1182 | 321 | 0 | 99.61 | | > 15000 | | | 3.96 |
| **Polymerization Procedure 2** | | | | | | | | | | | |
| 10 | A | 1.5 | 11 | 0 | 0 | 99.85 | 1142 | 867 | 500 | -2.34 | 1.50 |
| 11 | C | 17 | 131 | 43 | 378 | 99.62 | 2250 | 1091 | 488 | -2.02 | 1.60 |
| 12 | D | 24 | 184 | 71 | 585 | 99.39 | 2688 | 1391 | 555 | -2.06 | 1.59 |

**TABLE 2**

| Expt # | 4-4'-DFBP Source ** | [oxidizing species] (μmol Ti3 +/g DFBP) | $[NO_2]$ Mg/kg ($TiCl_3$ Titration) | [N] by chemolumiscence (mg N/kg DFBP) | L* | a* | b* | MV (Poise) at 1000 $sec^{-1}$ | $L^*_{min= 104- 112.27\ Log}$ ($MV_{1000}$) | Delta L* |
|---|---|---|---|---|---|---|---|---|---|---|
| 1 | A | 1.5 | 5 | 0 | 77.0 | 1.1 | 7.4 | 5247 | 70.6 | 6.4 |
| 2 | B | 12 | 94 | 31 | 74.5 | 1.0 | 7.1 | 4759 | 71.2 | 3.4 |
| 3 | D | 24 | 184 | 71 | 71.7 | 1.3 | 8.1 | 4729 | 71.2 | 0.5 |
| 4 | C | 17 | 131 | 43 | 66.3 | 0.5 | 4.5 | 6792 | 69.3 | -2.9 |
| 5 | A+3,3'DNBP | 10 | 80 | 22 | 74.6 | 1.4 | 9.1 | 5872 | 70.0 | 4.5 |
| 6 | A+3,3'DNBP | 26 | 199 | 54 | 70.2 | 1.6 | 9.3 | 5371 | 70.5 | -0.3 |
| 7 | A+3,3'DNBP | 40 | 307 | 83 | 67.0 | 1.8 | 7.8 | 3795 | 72.4 | -5.3 |
| 8 | A+3,3'DNBP | 50 | 383 | 104 | 63.5 | 1.9 | 8.1 | 4992 | 70.9 | -7.4 |
| 9 | A+3,3'DNBP | 154 | 1182 | 321 | 47.7 | 2.7 | 7.9 | > 15000 | 65.0 | -17.3 |
| Polymerization Procedure 2 | | | | | | | | | | |
| 10 | A | 1.5 | 11 | 0 | 81.4 | 0.65 | 5.46 | 867 | 80.2 | 1.2 |
| 11 | C | 17 | 131 | 43 | 73.2 | 1.39 | 6.96 | 1091 | 79.0 | -5.8 |
| 12 | D | 24 | 184 | 71 | 77.3 | 0.06 | 7.66 | 1391 | 77.7 | -0.4 |

** 4-4'-DFBP Sources were : A = Jintan, B=Riedel-de-Haen, C= Aldrich, D=Acros. Analysis for total $[NO_2]$ by $TiCl_3$ back titration analysis. Where indicated, the original 4-4'-DFBP sample was spiked with commercially available 3,3'-dinitrobenzophenone (3,3'-DDNBP).

The above written description of the invention provides a manner and process of making and using it such that any person skilled in this art is enabled to make and use the same, this enablement being provided in particular for the subject matter of the appended claims, which make up a part of the original description.

## Claims

1. A process for preparing a poly(aryl ether ketone) by

   a) obtaining

      i) 4,4'-difluorobenzophenone, and
      ii) one or more nucleophiles, wherein said nucleophiles are selected from the group consisting of p-hydroquinone, 4,4'-dihydroxybenzophenone, 4,4'-biphenol, 1,4-bis-(p-hydroxybenzoyl)benzene, 1,3-bis-(p-hydroxybenzoyl)benzene, and mixtures thereof,

   b) and reacting the obtained 4,4'-difluorobenzophenone and the one or more nucleophiles, to form the poly(aryl ether ketone),

   wherein the obtained 4,4'-difluorobenzophenone comprises a total concentration of one or more oxidizing species, as measurable by $TiCl_3$ back titration analysis of the obtained 4,4'-difluorobenzophenone, corresponding to between about 1.5 and about 80 μmol of $TiCl_3$ oxidized by the oxidizing species during the $TiCl_3$ back titration analysis per gram of obtained 4,4'-difluorobenzophenone, wherein said $TiCl_3$ back titration analysis comprising the steps of:

   c) preparing a 4,4'-difluorobenzophenone sample solution by contacting a measured quantity of 4,4'-difluorobenzophenone that may comprise one or more oxidizing species, one or more solvents, and a pH buffer, to form at least some of a sample solution within a measurement vessel,
   d) reducing the oxidizing species present in the sample solution with an excess initial quantity of at least one or more$Ti^{3+}$ compounds,
   e) measuring the quantity of excess $Ti^{3+}$ compounds remaining in the sample solution after the reduction of the oxidizing species, by back-titrating the sample solution after the reduction of the oxidizing species with an oxidant for the remaining $Ti^{3+}$ compounds, and
   f) calculating the quantity of $Ti^{3+}$ compounds used to reduce oxidizing species in the 4,4'-difluorobenzophenone, and
   g) relating the quantity of $Ti^{3+}$ compounds used to reduce oxidizing species in the 4,4'-difluorobenzophenone during the titration to the concentration of oxidizing species in the 4,4'-difluorobenzophenone by assuming that each mole of $Ti^{3+}$ compound provides one electron for the reduction of the one or more oxidizing species.

2. The process of claim 1 wherein between about 1.5 and about 40 μmol of $TiCl_3$ is oxidized by the oxidizing species during the $TiCl_3$ back titration analysis per gram of obtained 4,4'-difluorobenzophenone.

3. The process of claim 1 wherein between about 1.5 and about 13 μmol of $TiCl_3$ is oxidized by the oxidizing species during the $TiCl_3$ back titration analysis per gram of obtained 4,4'-difluorobenzophenone.

4. The process of claim 1 wherein between about 13 and about 40 μmol of $TiCl_3$ is oxidized by the oxidizing species during the $TiCl_3$ back titration analysis per gram of obtained 4,4'-difluorobenzophenone.

5. The process of claim 1 obtained 4,4'-difluorobenzophenone is at least about 99.5 % pure in total area percentage as measurable by gas chromatography.

6. The process of any one of claims 1 to 6 wherein the oxidizing species comprise at least one organic nitro compounds, one or more organic nitroso compounds, one or more organic hydroxyl amine compounds, or one or more inorganic nitrite salts, or mixtures thereof

7. The process of claim 6 wherein the at least one organic nitro compounds comprise the compound having the structure

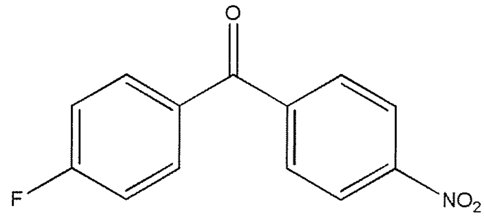

at a concentration of between about 5 and about 1900 parts per million parts of 4,4'-difluorobenzophenone as measurable by gas chromatography.

**8.** The process of any one of claims 1-7 wherein the total concentration of oxidizing species in the obtained 4,4'-difluorobenzophenone as measurable by $TiCl_3$ redox titration analysis is controlled so as to provide a pre-selected concentration of oxidizing species per kilogram of obtained 4,4'-difluorobenzophenone that is within the recited range and does not vary by more than about $\pm25$ % of the pre-selected concentration.

**9.** The process of any one of claims 1-7 wherein the concentration of oxidizing species in the obtained 4,4'-difluorobenzophenone results from an action or process that controls, produces, or modulates the concentration of oxidizing species in the obtained 4,4'-difluorobenzophenone so as to be within the cited concentration range.

**10.** The process of any of the preceding claims wherein the poly(aryl ether ketone) predominantly comprises repeat units having the structure

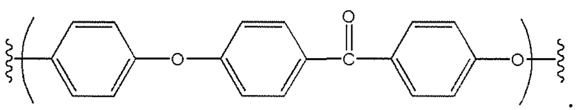

.

**11.** The process of any one of the preceding claims wherein the obtained 4,4'-difluorobenzophenone is itself prepared by a process of treating a 4,4'-difluorobenzophenone comprising oxidizing species in a total concentration corresponding to more than 80 $\mu$mol of $TiCl_3$ oxidized by the oxidizing species during the $TiCl_3$ back titration analysis per gram of the 4,4'-difluorobenzophenone, to obtain 4,4'-difluorobenzophenone that is within the range of total concentration of the one or more oxidizing species as recited in the preceding claim.

**12.** A poly (aryl ether ketone) produced by any one of the processes of any one of claims 1-11.

**13.** An analytical method for measuring an estimate of the concentration of one or more oxidizing species reducible by $Ti^{3+}$ compounds that are present in 4,4'-difluorobenzophenone, comprising

a) preparing a 4,4'-difluorobenzophenone sample solution by contacting a measured quantity of 4,4'-difluorobenzophenone that may comprise one or more oxidizing species, one or more solvents, and a pH buffer, to form at least some of a sample solution within a measurement vessel,
b) reducing the oxidizing species present in the sample solution with an excess initial quantity of at least one or more$Ti^{3+}$ compounds,
c) measuring the quantity of excess $Ti^{3+}$ compounds remaining in the sample solution after the reduction of the oxidizing species, by back-titrating the sample solution after the reduction of the oxidizing species with an oxidant for the remaining $Ti^{3+}$ compounds, and
d) calculating the quantity of $Ti^{3+}$ compounds used to reduce oxidizing species in the 4,4'-difluorobenzophenone, and
e) relating the quantity of $Ti^{3+}$ compounds used to reduce oxidizing species in the 4,4'-difluorobenzophenone during the titration to the concentration of oxidizing species in the 4,4'-difluorobenzophenone by assuming that each mole of $Ti^{3+}$ compound provides one electron for the reduction of the one or more oxidizing species.

## Patentansprüche

**1.** Verfahren zum Herstellen eines Poly(aryletherketons) durch

a) Erhalten von

i) 4,4'-Difluorbenzophenon und
ii) einem oder mehreren Nukleophilen, wobei die Nukleophile ausgewählt sind aus der Gruppe bestehend aus p-Hydrochinon, 4,4'-Dihydroxybenzophenon, 4,4'-Biphenol, 1,4-Bis(p-hydroxybenzoyl)benzol, 1,3-Bis(p-hydroxybenzoyl)benzol und Gemischen davon,

b) und Umsetzen des erhaltenen 4,4'-Difluorbenzophenons und des einen oder der mehreren Nukleophile, um das Poly(aryletherketon) zu bilden,

wobei das erhaltene 4,4'-Difluorbenzophenon eine Gesamtkonzentration von einer oder mehreren oxidierenden Spezies aufweist, wie gemessen durch $TiCl_3$-Rücktitrationsanalyse des erhaltenen 4,4'-Difluorbenzophenons, die zwischen etwa 1,5 und etwa 80 $\mu$mol $TiCl_3$ entspricht, die bei der $TiCl_3$-Rücktitrationsanalyse von der oxidierenden Spezies pro Gramm an erhaltenem 4,4'-Difluorbenzophenon oxidiert werden, wobei die $TiCl_3$-Rücktitrationsanalyse die Schritte umfasst:

c) Herstellen einer 4,4'-Difluorbenzophenon-Probenlösung durch Inkontaktbringen einer abgemessenen Menge von 4,4'-Difluorbenzophenon, die eine oder mehrere oxidierende Spezies umfassen kann, eines oder mehrerer Lösungsmittel und eines pH-Puffers, um wenigstens etwas an einer Probenlösung in einem Messgefäß zu bilden,
d) Reduzieren der in der Probenlösung vorhandenen oxidierenden Spezies mit einer überschüssigen Anfangsmenge wenigstens einer oder mehrerer $Ti^{3+}$-Verbindungen,
e) Messen der Menge von überschüssigen $Ti^{3+}$-Verbindungen, die nach der Reduktion der oxidierenden Spezies in der Probenlösung verbleiben, durch Rücktitration der Probenlösung nach der Reduktion der oxidierenden Spezies mit einem Oxidationsmittel für die verbleibenden $Ti^{3+}$-Verbindungen und
f) Berechnen der Menge der zum Reduzieren von oxidierenden Spezies in dem 4,4'-Difluorbenzophenon verwendeten $Ti^{3+}$-Verbindungen und
g) Inbeziehungsetzen der Menge von bei der Titration zum Reduzieren von oxidierenden Spezies in dem 4,4'-Difluorbenzophenon verwendeten $Ti^{3+}$-Verbindungen mit der Konzentration von oxidierenden Spezies in dem 4,4'-Difluorbenzophenon durch die Annahme, dass jedes Mol an $Ti^{3+}$-Verbindung ein Elektron für die Reduktion der einen oder mehreren oxidierenden Spezies liefert.

**2.** Verfahren gemäß Anspruch 1, wobei bei der $TiCl_3$-Rücktitrationsanalyse zwischen etwa 1,5 und etwa 40 $\mu$mol $TiCl_3$ pro Gramm des erhaltenen 4,4'-Difluorbenzophenons von den oxidierenden Spezies oxidiert werden.

**3.** Verfahren gemäß Anspruch 1, wobei bei der $TiCl_3$-Rücktitrationsanalyse zwischen etwa 1,5 und etwa 13 $\mu$mol $TiCl_3$ pro Gramm des erhaltenen 4,4'-Difluorbenzophenons von den oxidierenden Spezies oxidiert werden.

**4.** Verfahren gemäß Anspruch 1, wobei bei der $TiCl_3$-Rücktitrationsanalyse zwischen etwa 13 und etwa 40 $\mu$mol $TiCl_3$ pro Gramm des erhaltenen 4,4'-Difluorbenzophenons von den oxidierenden Spezies oxidiert werden.

**5.** Verfahren gemäß Anspruch 1, wobei das erhaltene 4,4'-Difluorbenzophenon wenigstens etwa 99,5 % Gesamtflächenanteil, wie messbar durch Gaschromatographie, rein ist.

**6.** Verfahren gemäß einem der Ansprüche 1 bis 6, wobei die oxidierenden Spezies wenigstens eine organische Nitroverbindung, eine oder mehrere organische Nitrosoverbindungen, eine oder mehrere organische Hydroxylaminverbindungen oder eine oder mehrere anorganische Nitritsalze oder Gemische davon umfassen.

**7.** Verfahren gemäß Anspruch 6, wobei die wenigstens eine organische Nitroverbindung die Verbindung mit der Struktur

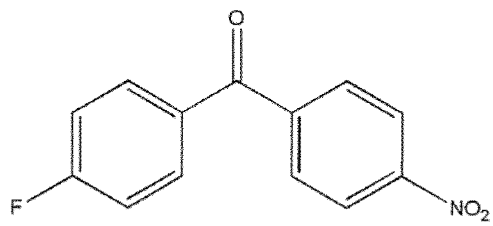

mit einer Konzentration von zwischen etwa 5 und etwa 1900 Parts per Million bezogen auf das 4,4'-Difluorbenzophenon, wie messbar durch Gaschromatographie, umfasst.

**8.** Verfahren gemäß einem der Ansprüche 1-7, wobei die Gesamtkonzentration von oxidierenden Spezies in dem erhaltenen 4,4'-Difluorbenzophenon, wie messbar durch $TiCl_3$-Redoxtitrationsanalyse, gesteuert wird, um eine vorgewählte Konzentration von oxidierenden Spezies pro Kilogramm an erhaltenem 4,4'-Difluorbenzophenon bereitzustellen, die innerhalb des angegebenen Bereichs liegt und um nicht mehr als etwa ±25 % der vorgewählten Konzentration variiert.

**9.** Verfahren gemäß einem der Ansprüche 1-7, wobei die Konzentration von oxidierenden Spezies in dem erhaltenen 4,4'-Difluorbenzophenon aus einer Maßnahme oder einem Verfahren stammt, die/das die Konzentration von oxidierenden Spezies in dem erhaltenen 4,4'-Difluorbenzophenon so steuert, erzeugt oder moduliert, dass sie innerhalb des angegebenen Konzentrationsbereichs liegt.

**10.** Verfahren gemäß einem der vorstehenden Ansprüche, wobei das Poly(aryletherketon) vorwiegend Wiederholungseinheiten mit der Struktur

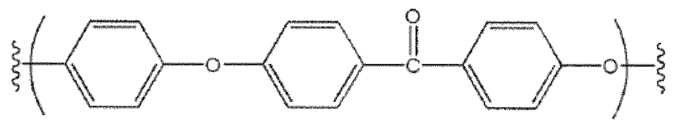

umfasst.

**11.** Verfahren gemäß einem der vorstehenden Ansprüche, wobei das erhaltene 4,4'-Difluorbenzophenon selbst durch ein Verfahren zum Behandeln eines 4,4'-Difluorbenzophenons hergestellt wird, das oxidierende Spezies in einer Gesamtkonzentration umfasst, die mehr als 80 μmol $TiCl_3$ entspricht, die bei der $TiCl_3$-Rücktitrationsanalyse von der oxidierenden Spezies pro Gramm des 4,4'-Difluorbenzophenons oxidiert werden, um 4,4'-Difluorbenzophenon zu erhalten, das in dem in dem vorstehenden Anspruch genannten Bereich der Gesamtkonzentration der einer oder mehreren oxidierenden Spezies liegt.

**12.** Poly(aryletherketon), hergestellt durch eines der Verfahren gemäß einem der Ansprüche 1-11.

**13.** Analyseverfahren zum Bestimmen einer Abschätzung der Konzentration einer oder mehrerer durch $Ti^{3}$+-Verbindungen reduzierbarer oxidierender Spezies, die in 4,4'-Difluorbenzophenon enthalten sind, umfassend

a) Herstellen einer 4,4'-Difluorbenzophenon-Probenlösung durch Inkontaktbringen einer abgemessenen Menge von 4,4'-Difluorbenzophenon, die eine oder mehrere oxidierende Spezies umfassen kann, eines oder mehrerer Lösungsmittel und eines pH-Puffers, um wenigstens etwas an einer Probenlösung in einem Messgefäß zu bilden,
b) Reduzieren der in der Probenlösung vorhandenen oxidierenden Spezies mit einer überschüssigen Anfangsmenge wenigstens einer oder mehrerer $Ti^{3+}$-Verbindungen,
c) Messen der Menge von überschüssigen $Ti^{3+}$-Verbindungen, die nach der Reduktion der oxidierenden Spezies in der Probenlösung verbleiben, durch Rücktitration der Probenlösung nach der Reduktion der oxidierenden Spezies mit einem Oxidationsmittel für die verbleibenden $Ti^{3}$+-Verbindungen und
d) Berechnen der Menge der zum Reduzieren von oxidierenden Spezies in dem 4,4'-Difluorbenzophenon verwendeten $Ti^{3+}$-Verbindungen und
e) Inbeziehungsetzen der Menge von bei der Titration zum Reduzieren von oxidierenden Spezies in dem 4,4'-Difluorbenzophenon verwendeten $Ti^{3+}$-Verbindungen mit der Konzentration von oxidierenden Spezies in dem 4,4'-Difluorbenzophenon durch die Annahme, dass jedes Mol an $Ti^{3+}$-Verbindung ein Elektron für die Reduktion der einen oder mehreren oxidierenden Spezies liefert.

## Revendications

**1.** Procédé pour la préparation d'une poly(aryléthercétone) par

a) obtention de

i) 4,4'-difluorobenzophénone et
ii) un ou plusieurs nucléophiles, lesdits nucléophiles étant choisis dans le groupe constitué par la *p*-hydroquinone, la 4,4'-dihydroxybenzophénone, le 4,4'-biphénol, le 1,4-bis(*p*-hydroxybenzoyl)benzène, le 1,3-bis(*p*-hydroxybenzoyl)benzène et les mélanges de ceux-ci,

b) et réaction de la 4,4'-difluorobenzophénone obtenue et du ou des nucléophiles, pour former la poly(aryléthercétone),

dans lequel la 4,4'-difluorobenzophénone obtenue comprend une concentration totale d'une ou plusieurs espèces oxydantes, telle que mesurable par analyse par titrage en retour de $TiCl_3$ de la 4,4'-difluorobenzophénone obtenue, correspondant à entre environ 1,5 et environ 80 μmol de $TiCl_3$ oxydé par les espèces oxydantes pendant l'analyse par titrage en retour de $TiCl_3$ par gramme de 4,4'-difluorobenzophénone obtenue, ladite analyse par titrage en retour de $TiCl_3$ comprenant les étapes de :

c) préparation d'une solution d'échantillon de 4,4'-difluorobenzophénone par la mise en contact d'une quantité mesurée de 4,4'-difluorobenzophénone qui peut comprendre une ou plusieurs espèces oxydantes, d'un ou plusieurs solvants et d'un tampon de pH, pour former au moins un peu d'une solution d'échantillon à l'intérieur d'une cuve de mesure,
d) réduction des espèces oxydantes présentes dans la solution d'échantillon avec une quantité initiale en excès d'au moins un ou plusieurs composés de $Ti^{3+}$,
e) mesure de la quantité de composés de $Ti^{3+}$ en excès restant dans la solution d'échantillon après la réduction des espèces oxydantes, par titrage en retour de la solution d'échantillon après la réduction des espèces oxydantes avec un oxydant pour les composés de $Ti^{3+}$ restants et
f) calcul de la quantité de composés de $Ti^{3+}$ utilisés pour réduire les espèces oxydantes dans la 4,4'-difluorobenzophénone et
g) mise en relation de la quantité de composés de $Ti^{3+}$ utilisés pour réduire les espèces oxydantes dans la 4,4'-difluorobenzophénone pendant le titrage avec la concentration des espèces oxydantes dans la 4,4'-difluorobenzophénone par supposition que chaque mole de composé de $Ti^{3+}$ fournit un électron pour la réduction de la ou les espèces oxydantes.

**2.** Procédé selon la revendication 1 dans lequel entre environ 1,5 et environ 40 μmol de $TiCl_3$ est oxydé par les espèces oxydantes pendant l'analyse par titrage en retour de $TiCl_3$ par gramme de 4,4'-difluorobenzophénone obtenue.

**3.** Procédé selon la revendication 1 dans lequel entre environ 1,5 et environ 13 μmol de $TiCl_3$ est oxydé par les espèces oxydantes pendant l'analyse par titrage en retour de $TiCl_3$ par gramme de 4,4'-difluorobenzophénone obtenue.

**4.** Procédé selon la revendication 1 dans lequel entre environ 13 et environ 40 μmol de $TiCl_3$ est oxydé par les espèces oxydantes pendant l'analyse par titrage en retour de $TiCl_3$ par gramme de 4,4'-difluorobenzophénone obtenue.

**5.** Procédé selon la revendication 1 dans lequel la 4,4'-difluorobenzophénone obtenue est pure à au moins environ 99,5 % en termes de pourcentage surfacique tel que mesurable par chromatographie en phase gazeuse.

**6.** Procédé selon l'une quelconque des revendications 1 à 6 dans lequel les espèces oxydantes comprennent au moins un composé organique nitré, un ou plusieurs composés nitroso organiques, un ou plusieurs composés hydroxylamines organiques ou un ou plusieurs sels de type nitrite inorganiques ou des mélanges de ceux-ci.

**7.** Procédé selon la revendication 6 dans lequel l'au moins un ou plusieurs composés organiques nitrés comprennent le composé ayant la structure

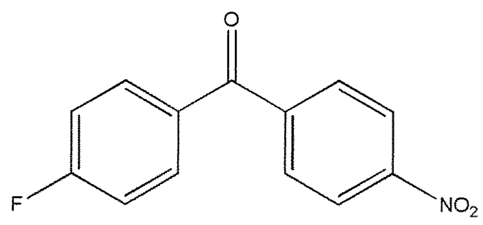

en une concentration telle que mesurable par chromatographie en phase gazeuse comprise entre environ 5 et

environ 1900 parties par million de parties de 4,4'-difluorobenzophénone.

**8.** Procédé selon l'une quelconque des revendications 1-7 dans lequel la concentration totale des espèces oxydantes dans la 4,4'-difluorobenzophénone obtenue telle que mesurable par analyse par titrage redox de $TiCl_3$ est réglée de manière à fournir une concentration préalablement choisie d'espèces oxydantes par kilogramme de 4,4'-difluorobenzophénone obtenue qui est à l'intérieur de la plage indiquée et qui ne varie pas de plus d'environ ± 25 % de la concentration préalablement choisie.

**9.** Procédé selon l'une quelconque des revendications 1-7 dans lequel la concentration des espèces oxydantes dans la 4,4'-difluorobenzophénone obtenue résulte d'une action ou d'un processus qui règle, produit ou module la concentration d'espèces oxydantes dans la 4,4'-difluorobenzophénone obtenue de manière à ce qu'elle soit à l'intérieur de la plage de concentration citée.

**10.** Procédé selon l'une quelconque des revendications précédentes dans lequel la poly(aryléthercétone) comprend principalement des motifs répétés ayant la structure

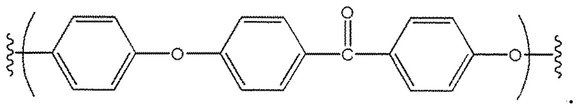

**11.** Procédé selon l'une quelconque des revendications précédentes dans lequel la 4,4'-difluorobenzophénone obtenue est elle-même préparée par un procédé de traitement d'une 4,4'-difluorobenzophénone comprenant des espèces oxydantes en une concentration totale correspondant à plus de 80 µmol de $TiCl_3$ oxydé par les espèces oxydantes pendant l'analyse par titrage en retour de $TiCl_3$ par gramme de la 4,4'-difluorobenzophénone, pour obtenir de la 4,4'-difluorobenzophénone qui est à l'intérieur de la plage de concentration totale de la ou les espèces oxydantes telle qu'indiquée dans la revendication précédente.

**12.** Poly(aryléthercétone) produite par l'un quelconque des procédés selon l'une quelconque des revendications 1-11.

**13.** Méthode analytique pour la mesure d'une estimation de la concentration d'une ou plusieurs espèces oxydantes réductibles par des composés de $Ti^{3+}$ qui sont présentes dans de la 4,4'-difluorobenzophénone, comprenant

a) la préparation d'une solution d'échantillon de 4,4'-difluorobenzophénone par la mise en contact d'une quantité mesurée de 4,4'-difluorobenzophénone qui peut comprendre une ou plusieurs espèces oxydantes, d'un ou plusieurs solvants et d'un tampon de pH, pour former au moins un peu d'une solution d'échantillon à l'intérieur d'une cuve de mesure,
b) la réduction des espèces oxydantes présentes dans la solution d'échantillon avec une quantité initiale en excès d'au moins un ou plusieurs composés de $Ti^{3}+$,
c) la mesure de la quantité de composés de $Ti^{3+}$ en excès restant dans la solution d'échantillon après la réduction des espèces oxydantes, par titrage en retour de la solution d'échantillon après la réduction des espèces oxydantes avec un oxydant pour les composés de $Ti^{3+}$ restants et
d) le calcul de la quantité de composés de $Ti^{3+}$ utilisés pour réduire les espèces oxydantes dans la 4,4'-difluorobenzophénone et
e) la mise en relation de la quantité de composés de $Ti^{3+}$ utilisés pour réduire les espèces oxydantes dans la 4,4'-difluorobenzophénone pendant le titrage avec la concentration des espèces oxydantes dans la 4,4'-difluorobenzophénone par supposition que chaque mole de composé de $Ti^{3+}$ fournit un électron pour la réduction de la ou les espèces oxydantes.

Figure 1

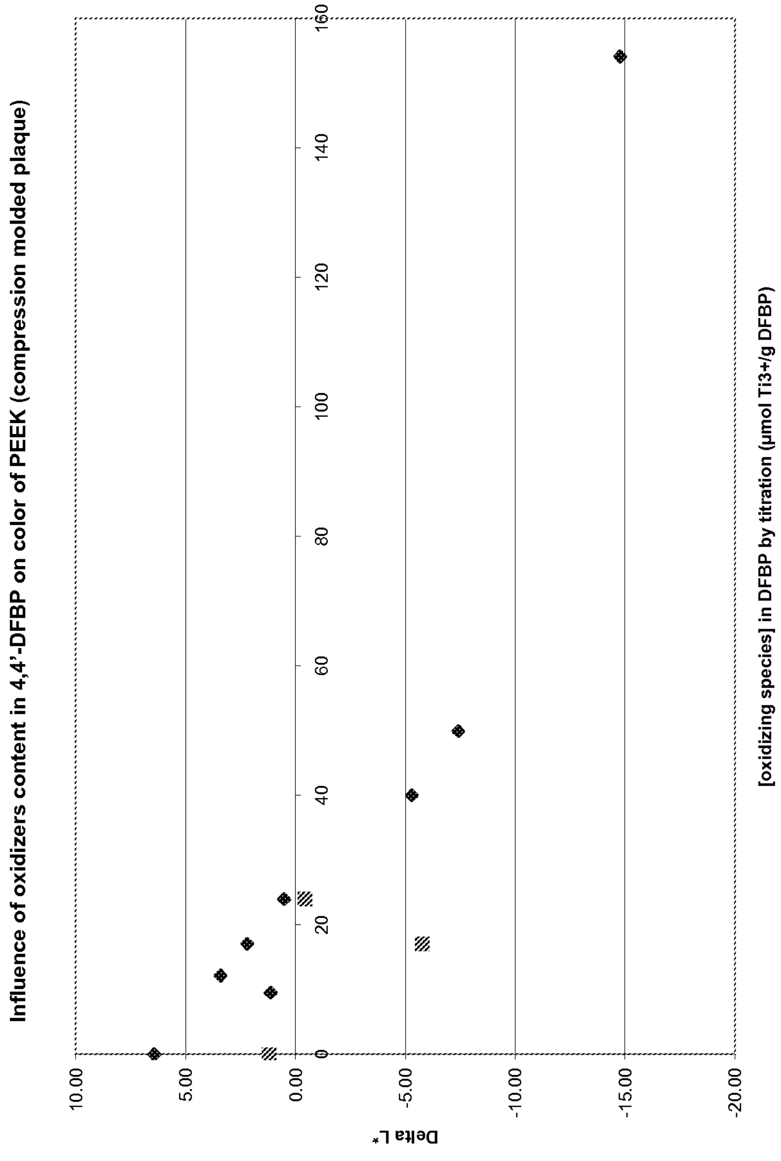
Influence of oxidizers content in 4,4'-DFBP on color of PEEK (compression molded plaque)
Delta L*
10.00
5.00
0.00
-5.00
-10.00
-15.00
-20.00
0
20
40
60
80
100
120
140
160
[oxidizing species] in DFBP by titration (µmol Ti3+/g DFBP)

Figure 2

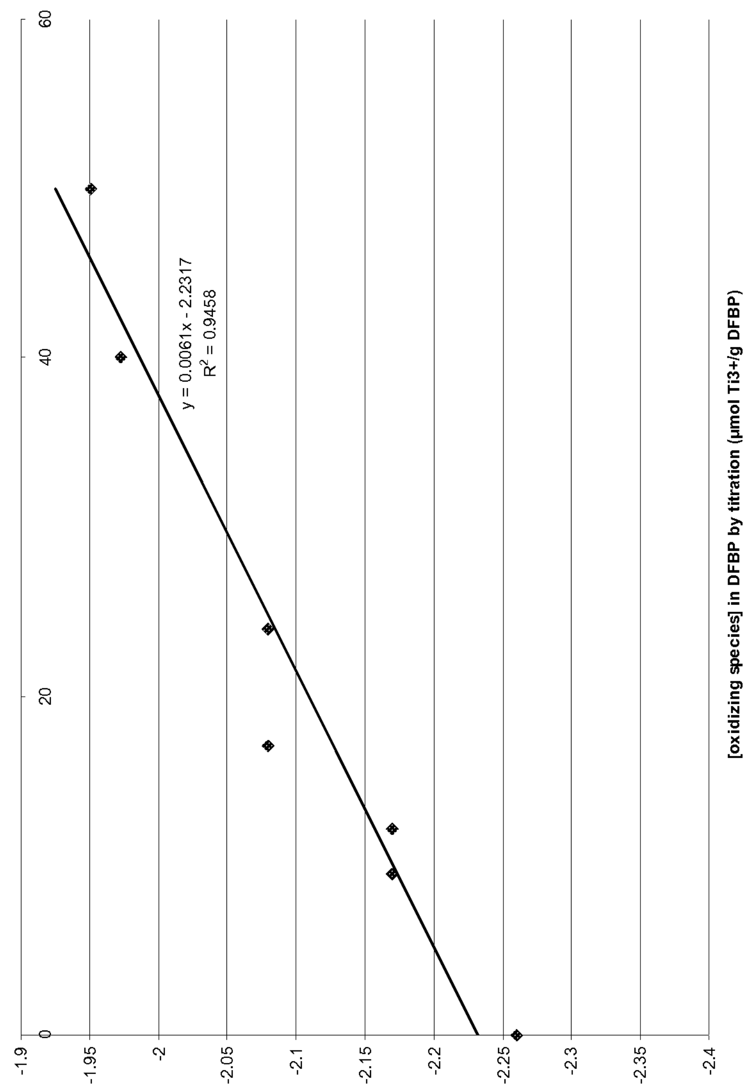
y = 0.0061x - 2.2317
R2 = 0.9458
log MV 100 - 2 log MV 10000
[oxidizing species] in DFBP by titration (µmol Ti3+/g DFBP)
0
20
40
60
-1.9
-1.95
-2
-2.05
-2.1
-2.15
-2.2
-2.25
-2.3
-2.35
-2.4

Figure 3

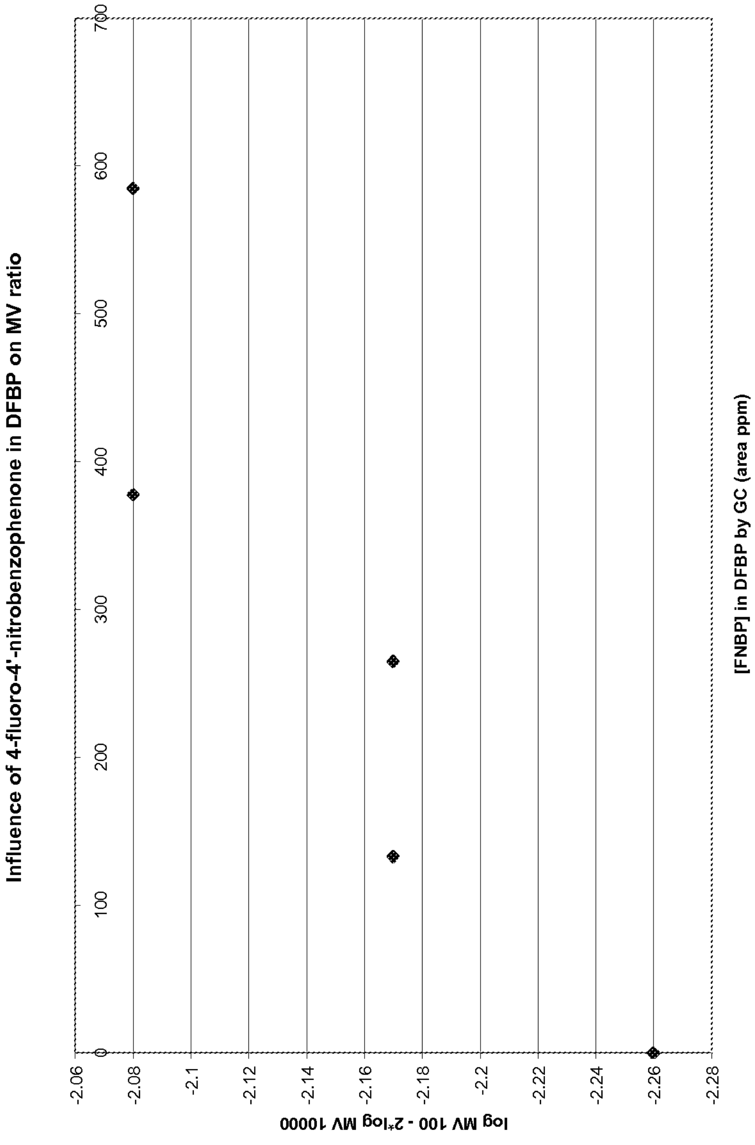
Influence of 4-fluoro-4'-nitrobenzophenone in DFBP on MV ratio
log MV 100 - 2*log MV 10000
[FNBP] in DFBP by GC (area ppm)
-2.06
-2.08
-2.1
-2.12
-2.14
-2.16
-2.18
-2.2
-2.22
-2.24
-2.26
-2.28
0
100
200
300
400
500
600
700

Figure 4

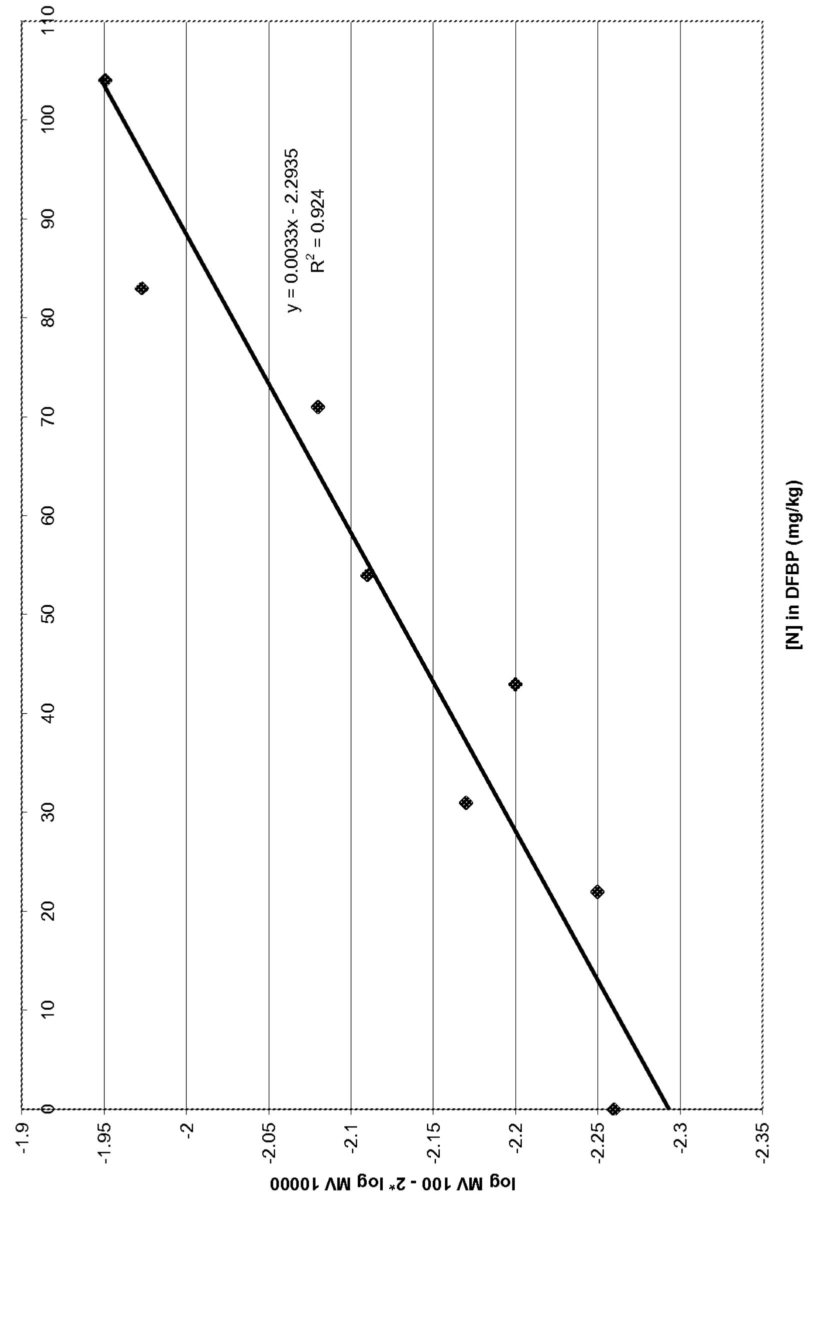
y = 0.0033x - 2.2935
$R^2$ = 0.924
[N] in DFBP (mg/kg)
log MV 100 - 2* log MV 10000
0
10
20
30
40
50
60
70
80
90
100
110
-1.9
-1.95
-2
-2.05
-2.1
-2.15
-2.2
-2.25
-2.3
-2.35

**Figure 5**

Mz/Mw by GPC

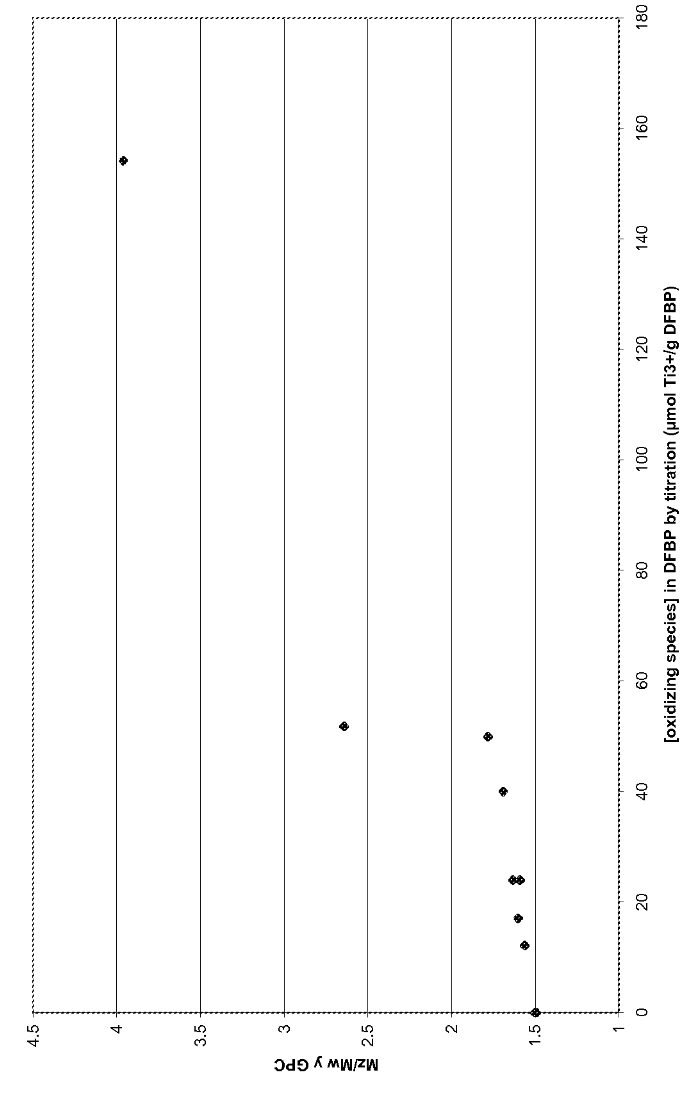

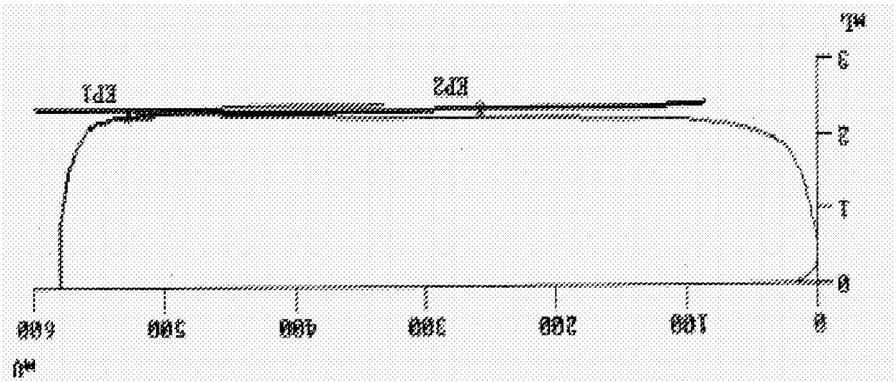

Figure 6b

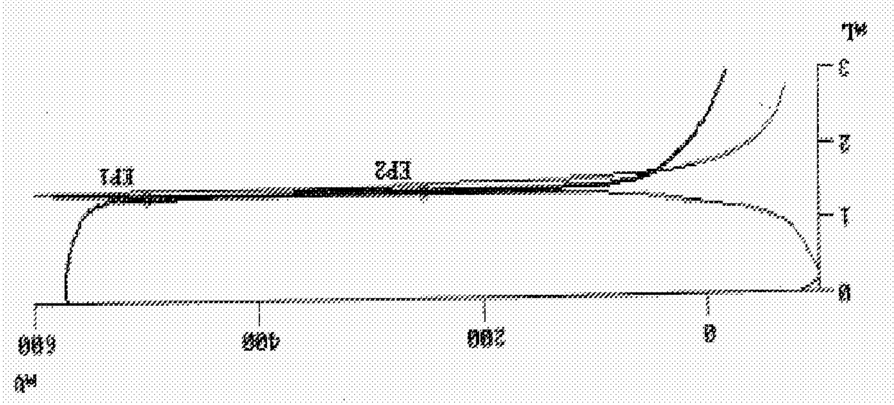

Figure 6a

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61361138 A
- EP 11155654 A
- US 3953400 A
- US 3956240 A
- US 3928295 A
- US 4176222 A
- EP 0004710 A
- US 5777172 A
- WO 2007144610 A
- WO 2007144615 A
- US 6274770 B
- US RE34085 E


### Non-patent literature cited in the description


- **J. RUNT ; M. KANCHANASOPA.** Crystallinity Determination. *Encyclopedia Of Polymer Science and Technology,* 2004
- **BLUNDELL et al.** *Polymer,* 1983, vol. 24, 953
- Molecular Weight Determination. **A. R. COOPER.** Encyclopedia of Polymer Science and Technology. John Wiley & Sons, 2004, vol. 10, 445-469
- Rheological Measurements. **C. K SCHOFF ; P. KAMARCHIK JR.** Encyclopedia of Polymer Science and Technology. John Wiley & Sons, 2004, vol. 11, 473-547
- **SALAZKIN et al.** Russian Chemical Bulletin. *Int. Ed.,* 2001, vol. 50 (7), 1208-1213
- **BEGAL et al.** *J. Org. Chem. USSR,* vol. 5, 1767-1774
- **KNECHT et al.** *Ber. Dtsch. Chem. Ges.,* 1903, vol. 36, 166
- **T. S. MA ; J. V. EARLY.** *Mikrochim. Acta,* 1959, 129
- **K. NASSAU.** Kirk-Othmer Encyclopedia of Chemical Technology. 2004, 303-341
- **J. RUNT ; M. KANCHANASOPA.** Crystallinity Determination. *Encyclopaedia Of Polymer Science and Technology,* 2004
- **J. JANCA.** Advances in Chromatography. Marcel Dekker, Inc, 1981, vol. 19, 37
- **K. NASSAU.** Kirk-Othmer Encyclopedia of Chemical Technology. 2004, vol. 7, 303-341